# EUROPÄISCHE PATENTSCHRIFT

(11) **EP 3 912 243 B1**
(45) Veröffentlichungstag und Bekanntmachung des Hinweises auf die Patenterteilung: **20.03.2024**
(21) Anmeldenummer: 20717249.5
(22) Anmeldetag: 14.01.2020
(51) Int. Cl.: H02G 11/00, F16G 13/18, F16L 3/015, F16G 13/16, H02G 3/04

(54) **KOMPAKTE LEITUNGSSCHUTZFÜHRUNG FÜR REINRAUMANWENDUNGEN, SOWIE HÜLLEINHEIT UND KLEMMVORRICHTUNG HIERFÜR**
COMPACT CONDUIT FOR CLEAN ROOM APPLICATIONS, AND CASING AND CLAMPING FIXTURE FOR SAID CONDUIT
GUIDE DE PROTECTION DE LIGNES/CONDUITS COMPACT POUR APPLICATIONS EN SALLE BLANCHE, AINSI QUE UNITÉ D'ENVELOPPE ET DISPOSITIF DE SERRAGE ASSOCIÉS

(30) Priorität: 14.01.2019 DE 202019100169 U; 11.06.2019 DE 202019103276 U
(43) Veröffentlichungstag der Anmeldung: 24.11.2021
(73) Patentinhaber: Igus GmbH, 51147 Köln (DE)
(72) Erfinder: HERMEY, Andreas, 53773 Hennef (DE); BARTEN, Dominik, 53340 Meckenheim (DE)
(74) Vertreter: Lippert Stachow Patentanwälte Rechtsanwälte
(86) Internationale Anmeldenummer: PCT/IB2020/000047
(87) Internationale Veröffentlichungsnummer: WO 2020/148596

(56) Entgegenhaltungen:
- EP-A1- 1 793 151
- EP-A2- 1 220 398
- WO-A1-2016/042134
- WO-A1-2017/140720
- WO-A1-2021/124954
- DE-B3-102006 019 133
- US-A- 3 160 175
- US-A1- 2012 205 498
- US-B2- 7 784 259

## Beschreibung

Die Erfindung betrifft allgemein das Gebiet der Leitungsführungseinrichtungen für Leitungen, wie z.B. Kabel zur Signal- oder Stromversorgung oder pneumatische bzw. hydraulische Schläuche oder dergleichen, die zwischen zwei relativbeweglichen Anschlussstelle einer Maschine oder Anlage dynamisch geführt werden sollen. Vorgeschlagen wird insbesondere eine dynamische Leitungsführungseinrichtung die zur Anwendung in Reinräumen geeignet ist, beispielsweise in der Halbleiter- oder Flachbildschirm-Herstellung, in pharmazeutischen Anlagen, in medizinischen Geräten, usw. In derartigen Anwendungen ist das Freisetzen von Partikeln durch die Leitungsführungseinrichtungen besonders unerwünscht und muss weitestgehend minimiert werden.

Energieführungsketten sind typische Leitungsführungseinrichtungen, in herkömmlicher Gliederketten-Bauweise mit Drehgelenken jedoch für Reinraumanwendung wenig geeignet, da solche Gliederketten selbst abriebbedingt im Betrieb Partikel freisetzen. Eine in dieser Hinsicht weiterentwickelte reinraumtaugliche Energieführungskette wurde in WO 02/086349 A1 vorgeschlagen. Diese Energieführungskette setzt dank biegsamer Gelenkverbindungen deutlich weniger Abrieb frei.

Ein bekanntes Problem besteht aber darin, dass auch die in einer ggf. abriebarmen Energieführungskette geführten Leitungen selbst im Betrieb Partikel freisetzen, da diese beim Verfahren bewegen, biegen und aneinander reiben. So geben z.B. die Ummantelungen der Kabel selbst beim Verfahren auch Partikel an die Umgebung ab.

Aus diesem Grund ist es bekannt, die Leitungen staubdicht zu umhüllen. Mehrere zu diesem Zweck weiterentwickelte Leitungsführungseinrichtungen für Reinraumanwendungen wurden von der Anmelderin in der WO 2016/042134 A1 vorgeschlagen. Eine dieser Lösungen (cf. dort FIG.10-16) ist inzwischen unter der Handelsbezeichnung "e-skin" von der Anmelderin (igus GmbH, D-51147 Köln) erhältlich.

Die vorliegende Erfindung betrifft nun speziell eine zur Reinraumanwendung geeignete Leitungsführungseinrichtung bzw. Leitungsschutzführung mit einer länglichen, flexiblen Umhüllung die reversibel bzw. hin- und hergehend verfahrbar ist, typisch unter Bildung eines Umlenkbogens zwischen zwei Trumen zwischen einer ersten Anschlussstelle und einer dazu relativbeweglichen Anschlussstelle. Dabei hat die vorgeschlagene Umhüllung eine Anzahl rohrförmig ausgeprägter Aufnahmen zur Führung mindestens einer Leitung, wobei jede Aufnahme sich kanalartig in einer Längsrichtung von einem ersten Ende zu einem zweiten Ende erstreckt, mit welchen die Schutzführung an den Anschlussstellen angebracht ist.

Gattungsgemäße Leitungsschutzführungen dieser Art sind bspw. unter der Handelsbezeichnung "GORE^{®} Trackless High Flex" von der Fa. W. L. Gore & Associates, Inc. oder unter der Handelsbezeichnung "ChannelFLEX^{™}" bzw. "EcoFlex^{™}" von der Fa. Hitachi Cable America Inc. erhältlich. Eine Variante der letztgenannten Leitungsschutzführung, die hier als gattungsbildender Stand der Technik (nach dem Oberbegriff aus Anspruch 1) angesehen wird, ist z.B. in DE 10 2012 100 290 B4 bzw. US 8,662,456 B2 beschrieben.

Derartige Leitungsschutzführungen sind technisch einfach aufgebaut und bauen kompakt und leicht. Sie haben jedoch bspw. gegenüber WO 2016/042134 A1 einen erheblichen Nutzungsnachteil. Eine Wartung, insbesondere ein Austausch einer einzelnen Leitung oder eines einzelnen Leitungsstrangs innerhalb einer mehrere Leitungen oder mehrere Leitungsstränge umfassenden Leitungsführung, ist nur mit erheblichem Aufwand möglich. Es kann insbesondere vor Ort kein Austausch einzelner Leitungen oder einzelner Leitungsstränge durch bereits mit den gewünschten Steckern bzw. Kupplungen passend vorkonfektionierte Leitungen erfolgen. Dies würde die Wartung erheblich vereinfachen und Kosten senken. Im Gegensatz dazu werden gattungsgemäße Leitungsführungen typisch vollständig als Paket erneuert, sodass dabei auch intakte Leitungen ausgetauscht werden müssen. Außerdem ist eine nachträgliche Veränderung einer installierten Leitungsführung, z.B. zur Ergänzung mit weiteren Leitungen, nicht ohne weiteres möglich.

Vor diesem Hintergrund liegt eine erste Aufgabe nach einem ersten Hauptanspruch der vorliegenden Erfindung darin, eine relativ kompakt bauende und/oder gewichtsarme Leitungsschutzführung vorzuschlagen, welche die vorgenannten Nachteile zumindest teilweise überwindet.

Die Erfindung soll insbesondere den Austausch einzelner Leitungen oder einzelner Leitungsstränge und/oder optional verwendeter Stützketten vereinfachen. Dies wird erreicht durch eine Leitungsschutzführung nach Anspruch 1.

Nach einem weiteren, vom Hauptanspruch unabhängigen Aspekt wird eine Verbesserung der Endanschlüsse, insbesondere der typisch verwendeten Klemmvorrichtungen, für gattungsgemäße d.h. zur Reinraumanwendung geeignete Leitungsführungseinrichtungen vorgeschlagen, welche insbesondere unerwünschte Abgabe von Partikeln im Betrieb vermindert.

### HAUPTASPEKT (Leitungsführung und Hülleinheit)

Erfindungsgemäß wird bei einer gattungsgemäßen Leitungsschutzführung vorgeschlagen, dass die Umhüllung, insbesondere seitlich an mindestens einer Aufnahme, mindestens einen oder mehrere in Längsrichtung erstreckte Funktionsbereiche aufweist, welche eine Zusatzfunktion dahingehend bieten, dass die Aufnahmen bedarfsweise geöffnet und wieder geschlossen werden können. Dadurch können einzelne Leitungen und/oder Stützketten bedarfsweise ausgetauscht werden.

In der Praxis hat sich insbesondere ein getrennter Austausch ggf. verwendeter Stützketten als vorteilhaft erwiesen, da diese üblicherweise vor den Versorgungsleitungen versagen bzw. ausgetauscht werden müssen. So kann ein bisher üblicher Komplettaustausch der gesamten Leitungsschutzführung vermieden werden. Auch Leitungsstränge können ausgetauscht werden. Unter einem Leitungsstrang wird dabei ein Bündel von Leitungen verstanden, insbesondere von zusammenhängenden Leitungen. Insbesondere sei an einen teilweisen Austausch einzelner Leitungsstränge gedacht, die von einer oder mehreren Hülleinheiten mit einer oder mehreren Aufnahmen aufgenommen sind.

Dazu kann erfindungsgemäß nach einem ersten Aspekt vorgesehen sein, dass der Funktionsbereich einen Verschluss zum Öffnen und Schließen einer oder mehrerer Aufnahmen bereitstellt, sodass eine oder mehrere Leitungen quer zur Längsrichtung bzw. seitlich/radial, insbesondere ohne Demontage der kompletten Umhüllung, eingefügt bzw. entnommen werden kann. Dazu weist der Funktionsbereich zwei zusammenwirkende Verschlussprofile auf, die zum möglichst staubdichten Schließen gestaltet sind und einen geöffneten Zustand der Aufnahme(n) ermöglichen, in welchem eine Leitung quer zur Längsrichtung eingefügt bzw. entnommen werden kann.

Ergänzend ist kann nach einem zweiten Aspekt vorgesehen sein, dass der bzw. ein Funktionsbereich ein Befestigungsband zum bedarfsweise Lösen bzw. Anbringen mindestens eines Teils der Umhüllung bzw. einer Aufnahme, umfasst oder bildet. Das Befestigungsband kann grundsätzlich nach einem beliebigen Verbindungsprinzip, durch Formschluss und/oder Kraftschluss, für eine zerstörungsfrei lösbare Verbindung mit einem entsprechenden Band bzw. zusammenwirkenden Funktionsbereich ausgeführt sein. Das Befestigungsband kann insbesondere als Befestigungsleiste oder Befestigungsprofil ausgeführt sein. Die Gestaltung der Befestigungsbänder ist dabei so gewählt, dass diese in einer Verbindungsrichtung quer zur Längsrichtung, insbesondere senkrecht zur Längsrichtung miteinander verbindbar ausgeführt sind. Quer zur Längsrichtung bedeutet dabei insbesondere eine Verbindungs- bzw. Fügerichtung in einer Ebene senkrecht zur Längsrichtung der einzelnen kanalartigen Aufnahmen, sodass eine als Ersatz dienende Umhüllung mit neuer Befüllung, etwa neuen Leitungen oder insbesondere einer oder mehreren neuen Stützketten, leicht an die bereits montierte restliche Anordnung seitlich angebracht werden kann, ohne dass dabei die verbleibenden Umhüllungen voneinander gelöst oder gar demontiert werden müssen. Es sind in der Regel hierzu lediglich die Endanschlüsse, z.B. dortige Klemmvorrichtungen, für den Austausch zu öffnen.

Beide Konzepte zur Funktionserweiterung erlauben gleichermaßen einen nachträglichen Austausch bzw. Nachrüstung mit einer bereits mit Steckverbindern, Kupplungen oder dgl. ausgestatteten Leitung, ohne die Umhüllung insgesamt demontieren zu müssen um ein Austreten von Partikel am Betriebsort, z.B. im Reinraum, zu vermeiden. Im ersten Aspekt kann die Leitung ohne Veränderung an der Umhüllung getauscht werden. Im zweiten Aspekt Fall wird nur ein Teil der Umhüllung mitsamt den betroffenen Leitungen oder insbesondere einer oder mehrerer auszutauschender Stützketten getauscht. Dabei sei sowohl an den Austausch einer einzelnen Aufnahme mit einer oder mehreren Leitungen bzw. Stützketten oder den Austausch einer Hülleinheit mit einem Leitungsstrang gedacht.Eine Hülleinheit hat jeweils mindestens eine Aufnahme für eine oder mehrere Leitungen bzw. einen Leitungsstrang oder auch für eine Stützkette an sich bekannter Bauweise. Die Aufnahmen sind rohrförmig ausgeführt.

Insbesondere bei Anwendungen mit längeren Verfahrwegen bzw. Umhüllungen ist es vorteilhaft, wenn in einer Aufnahme mindestens einer Hülleinheit eine Stützkette zum Stützen der Umhüllung beim Verfahren vorgesehen ist. Es können dabei an sich bekannte Stützketten in der Bauweise von Gliederketten verwendet werden. In einer Ausführungsform umfasst die Umhüllung mindestens eine Hülleinheit aus weichelastischem bzw. biegeelastischem Kunststoff, welche vorzugsweise einteilig ausgeführt ist. Die Hülleinheit könnte auch mehrteilig zusammengesetzt sein, z.B. aus zwei symmetrischen Halbhüllen bzw. ähnlich im Längsschnitt geteilten Rohrstücken. Eine einteilige Hülleinheit ist hier bevorzugt und kann z.B. Dichtheit gegen Partikelaustritt verbessern.

Wandstärke und Material der Umhüllung sind so gewählt, dass diese zum bestimmungsgemäßen verfahren ausreichend flexibel ausgeführt ist. Als weichelastischer bzw. biegeelastischer Kunststoff kommt bevorzugt ein Kunststoff, insbesondere Thermoplast, mit einer Shore Härte im Bereich von 20 Shore A (ShA 20) bis 65 Shore D (ShD 65), insbesondere im Bereich von 50 Shore A (ShA 50) bis 100 Shore A (ShA 100) in Betracht.

In bevorzugter Ausführungsform ist der mindestens eine Funktionsbereich jeweils einteilig mit der Hülleinheit verbunden (soz. nur durch Zerstörung lösbar). Hierzu kann dieser unmittelbar einstückig mit der Hülleinheit hergestellt oder auch separat hergestellt und nachträglich stoffschlüssig durch ein Fügeverfahren mit dieser verbunden sein, z.B. durch ein geeignetes thermisches Fügeverfahren, insbesondere Verschweißung. Im Rahmen der Erfindung liegt insbesondere eine separate Herstellung eines "vereinfachten Profils" ohne Funktionsbereich einerseits und des Funktionsbereichs bzw. Verschlussprofils andererseits, z.B. jeweils durch Extrudieren aus verschiedenen besonders geeigneten Kunststoffen, insbesondere Thermoplasten. Der Funktionsbereich, insbesondere das Verschlussprofil kann anschließend stoffschlüssig in Längsrichtung mit dem Rest der Hülleinheit zu einem Teil verbunden werden, z.B. durch ein Schweißverfahren zum Verschweißen von Kunststoffen.

In einer Ausführungsform wird die Umhüllung aus einer Mehrzahl separater Hülleinheiten zusammengesetzt. Dabei kann jede Hülleinheit jeweils genau eine Aufnahme bilden und jeweils ein mit der Hülleinheit einteiliges seitliches Befestigungsband, z.B. eine Leiste oder ein Profil, aufweisen.

Weiterhin kann eine Hülleinheit auch eine Mehrzahl von Aufnahmen umfassen und jeweils ein mit der Hülleinheit einteiliges seitliches Befestigungsband aufweisen. Hierdurch können einzelne Hülleinheiten parallel zu einer Umhüllung miteinander verbunden werden. In einer Weiterbildung hierzu kann jede Hülleinheit zwei beidseitig gegenüberliegende, mit der Hülleinheiten einteilige Befestigungsbänder aufweisen, mittels welcher benachbarte Hülleinheiten parallel miteinander verbindbar sind. Die Befestigungsbänder können zwecks unmittelbarer Zusammenwirkung zueinander passend, z.B. konjugiert bzw. formschlüssig ineinandergreifend, ausgeführt sein. Sie können auch mit einer separaten Befestigungsleiste zusammenwirken, welche zur Befestigung der Hülleinheiten miteinander verwendet wird.

In einer bevorzugen Ausführungsform wird eine Umhüllung von einer Mehrzahl von Hülleinheiten gebildet, welche jeweils gleich viele oder abweichend viele Aufnahmen aufweisen. Optional kann eine einzelne Hülleinheit insbesondere derart viele Aufnahmen aufweisen, dass ein Leitungsstrang von genau einer Hülleinheit aufgenommen werden kann. Somit wird vorteilhaft ermöglicht, dass innerhalb einer Umhüllung einzelne Leitungsstränge durch den Austausch der jeweilig zugehörigen Hülleinheit ausgetauscht werden können. Als Leitungsstrang werden dabei insbesondere Bündel bzw. Gruppen aus funktional zusammengehörenden Leitungen bezeichnet, z.B. gruppiert nach verschleißanfälligkeit bzw. Lebensdauer.

Jede Aufnahme hat bevorzugt zur Reduzierung von Verformung im Umlenkbogen einen langrunden oder ovalen, insbesondere spitzovalen, Querschnitt, wobei die Befestigungsbänder an den Schmalseiten angeordnet sind.

Jede Hülleinheit kann zudem seitlich, insbesondere dem Befestigungsband gegenüberliegend, zwei mit der Hülleinheit einteilige Verschlussprofile aufweisen.

In einer Ausführungsform kann vorgesehen sein, dass die Verschlussprofile einer Hülleinheit durch Verbinden mit dem Befestigungsband einer benachbarten Hülleinheit form- und/oder kraftschlüssig schließbar sind. Hierdurch kann z.B. bei Übermaß der Verschlussprofile, die in das gegenüberliegende Befestigungsband greifen, ein besonders robuster Verschluss erzielt werden, ohne zusätzlichen Montageschritt. Alternativ können benachbarte Hülleinheiten jeweils durch eine separate, flexible Befestigungsleiste, welche mit den Befestigungsbändern zusammenwirkt, parallel miteinander verbunden werden. So wird das Lösen des Verschlusses von der Befestigung durch die Befestigungsbänder getrennt, d.h. ein Abtrennen einer Hülleinheit kann nicht zum ungewollten Öffnen der angrenzenden Hülleinheit führen, sodass keine Abriebpartikel ungewollt freigesetzt werden.

In einer weiteren Ausführungsform ist vorgesehen, dass die Hülleinheit Unterteilungen umfasst, welche mehrere parallele Aufnahmen bilden und die Hülleinheit einen Verschluss aufweist, insbesondere mindestens zwei mit der Hülleinheit einteilige Verschlussprofile. So kann u.a. der Montageaufwand bei Anwendungen mit einer hohen Anzahl zu führender Leitungen verringert werden, da nicht für jede Leitung eine einzelne zu montierende Hülleinheit vorgesehen wird.

In einer Ausführungsform hat jede Aufnahme vorzugsweise einen zugeordneten eigenen Verschluss, sodass alle Aufnahmen und darin geführten Leitungen oder Stützketten getrennt zugänglich bleiben. Dazu kann an jeder Aufnahme ein Paar zusammenwirkender Verschlussprofile einteilig mit der Hülleinheit vorgesehen sein. Somit kann jede Aufnahme wahlweise und einzeln für einen seitlichen Zugang geöffnet und wieder verschlossen werden.

Bei großen Führungslängen oder besonders weichelastischen Umhüllungen bzw. Hülleinheiten kann in mindestens einer vorzugsweise in zwei seitlich äußeren Aufnahmen eine Stützkette, insbesondere aus einzelnen Kettengliedern, vorgesehen sein, welche ausgeführt ist, um einen Umlenkradius des Umlenkbogens vorzugeben und/oder ein freitragendes Trum in Strecklage zu stützen.

In bevorzugter Ausführungsform ist an jeder Schmalseite der Umhüllung, bei unterteilter Hülleinheit insbesondere jeweils mit dieser einteilig, ein Befestigungsprofil als Befestigungsband vorgesehen. Neben der Erweiterbarkeit kann dadurch bspw. alternativ zu einer Stützkette eine andersartige Stützvorrichtung extern an den Befestigungsprofilen der Umhüllung angebracht werden. Somit wird kein nutzbarer Aufnahmekanal zur Stützfunktion benötigt. Hierzu kann an jeder Schmalseite der Umhüllung jeweils eine externe Stützvorrichtung mit dem Befestigungsprofil verbunden sein die abriebarm ausgeführt ist um einen Umlenkradius des Umlenkbogens vorzugeben und/oder ein freitragendes Trum in Strecklage zu stützen. Bevorzugt hat dazu jede Stützvorrichtung ein Tragband und senkrecht dazu stehende Anschlagelemente, insbesondere T-förmige Anschlagelemente deren T-Arme im Umlenkbogen radial innen bzw. in Strecklage im Anschlag stehen. Das Tragband liegt vorzugsweise auf Höhe der neutralen Faser.

Eine Ausführungsform sieht vor, dass die Umhüllung eine Mehrzahl separater und umfänglich geschlossener Hülleinheiten umfasst. Dabei kann jede Hülleinheit jeweils genau eine Aufnahme bilden.

Jede Hülleinheit kann als Funktionsbereiche zur Befestigung zwei beidseitig gegenüberliegende, mit der Hülleinheiten einteilige Befestigungsbänder aufweist. Dabei können die Befestigungsbänder zur formschlüssigen Zusammenwirkung unmittelbar miteinander, z.B. in Art eines Reißverschlusses oder Gleitverschlusses oder dgl. ausgeführt sein, oder mit einer separaten Befestigungsleiste form- und/oder kraftschlüssig zusammenwirken.

Hülleinheiten gemäß jedem der beiden Aspekte, auch mit einer Kombination der Verschluss- und Befestigungsfunktion, können einen in Längsrichtung gleichbleibenden Querschnitt haben. Dies erlaubt eine profilartige Herstellung in einem Extrusionsverfahren, vorzugsweise aus weichelastischem bzw. biegeelastischem Kunststoff. Der Funktionsbereich kann dabei ggf. separat extrudiert werden.

Somit können insbesondere auch das erste und das zweite Befestigungsband einen in Längsrichtung gleichbleibenden Querschnitt haben, beispielsweise mit ineinandergreifendem Haken- und Klauenprofil oder ähnlicher geeigneter Formgebung, vorzugsweise mit einer Widerhaken-Funktion

Auch ein als Verschluss dienender Funktionsbereich lässt sich bspw. in Extrusion herstellen, wenn der Funktionsbereich zwei konjugierte ineinandergreifende in Längsrichtung durchgehende gleichbleibende Verschlussprofile aus Kunststoff aufweist, die als Druckverschluss oder zahnloser Schiebeverschluss oder vorzugsweise ähnlich einem Ziehverschluss zusammenwirken. Dabei kann jedes Verschlussprofil zwei Eingriffsprofile bzw. Profilelemente umfassen, und soz. einen Doppelverschluss bilden. Dies erweist sich für einen in Umfangsrichtung staubdichten und im dynamischen Betrieb robusten Verschluss besonders vorteilhaft.

Es können zwei seitlich gegenüberliegende Funktionsbereiche vorgesehen sein, welche jeweils ein Befestigungsprofil aufweisen, wobei die Befestigungsprofile vorzugsweise für eine formschlüssige Verbindung, z.B. eine Feder-Nut-Verbindung oder dgl., ausgeführt sind, die lediglich in Längsrichtung lösbar ist. So kann ein ungewolltes Ablösen von Hülleinheiten im Betrieb vermieden werden. Hierbei können die seitlich gegenüberliegenden Funktionsbereiche zugleich neben dem Befestigungsprofil vorzugsweise jeweils auch ein Verschlussprofil, insbesondere in der Querschnittsebene zwischen Aufnahme und Befestigungsprofil angeordnet, aufweisen.

Vorzugsweise sind benachbarte Aufnahmen parallel miteinander verbunden bzw. gekoppelt durch bandförmige Zwischenbereiche, welche die neutrale Faser vorgeben. Alternativ oder ergänzend liegt bevorzugt zu jedem Verschluss aus zusammenwirkenden Verschlussprofilen die Schnittstelle auf Höhe der neutralen Faser der Umhüllung. Die neutrale Faser soll insbesondere mittig durch den Querschnitt der Aufnahmen verlaufen. Hierbei kann zwischen jedem Verschlussprofil und einer angrenzenden Aufnahme ein im Vergleich zur Bauhöhe des jeweiligen Befestigungsbands dünnerer bandförmiger Zwischenbereich vorgesehen sein. Hierdurch kann insbesondere eine gute Biegsamkeit des Umlenkbogens um die gewünschte Achse bei hinreichender Steifigkeit in Querrichtung erzielt werden. Bevorzugt ist die Umhüllung im Wesentlichen linear (nicht mehraxial) verfahrbar gestaltet.

Endseitig können an der Umhüllung Klemmvorrichtungen vorgesehen sein, welche die Umhüllung und ggf. die Leitungen in Axialrichtung gegen Austritt von Staubpartikeln verschließen. Im typischen Anwendungsfall werden mindestens zwei Leitungen, meist eine Vielzahl Leitungen, voneinander getrennt in einer jeweiligen Aufnahme geführt und von der Umhüllung möglichst staubdicht umschlossen. Auch an den stirnseitigen Enden sollen keine Partikel austreten.

Es wird auch eine Hülleinheit als Einzelteil zur Herstellung einer Umhüllung nach einer der vorstehenden Ausführungsformen vorgeschlagen. Diese Hülleinheit ist z.B. aus Kunststoff, insbesondere weichelastischem bzw. biegeelastischem Kunststoff, hergestellt und hat mindestens eine rohrförmige Aufnahme zur Führung mindestens einer Leitung, welche sich kanalartig in einer Längsrichtung von einem ersten Ende zu einem zweiten Ende erstreckt. Die Hülleinheit kann dabei als Mantel zur in Umfangsrichtung staubdichten Umhüllung der Leitung(en) betrachtet werden und umgibt die Leitungen typisch lose (im Gegensatz zu einer eigentlichen, isolierenden Kabelummantelung).

Gemäß einer besonders vorteilhaften Kombination beider eingangs genannter Aspekte ist vorgesehen, dass die Hülleinheit an einer Längsseite zwei in Längsrichtung erstreckte zusammenwirkende Verschlussprofile umfasst, zum möglichst staubdichten Schließen eines geöffneten Zustands, in welchem eine Leitung quer zur Längsrichtung in die Aufnahme eingefügt bzw. entnommen werden kann und an der anderen Längsseite ein in Längsrichtung erstrecktes Befestigungsband für eine lösbare Verbindung mit einer weiteren Hülleinheit, insbesondere durch Formschluss und/oder Kraftschluss, mit einem entsprechenden Funktionsbereich einer weiteren Hülleinheit umfasst. Die Hülleinheit kann dabei mehrere, insbesondere parallele und rohrförmige, ausgeprägte Aufnahmen zur getrennten Führung von jeweils mindestens einer Leitung bilden oder jeweils genau eine Aufnahme.

In einem Beispiel hat die Hülleinheit an einer Längsseite ein erstes Befestigungsprofil und an der anderen Längsseite ein zweites Befestigungsprofil, und die Befestigungsprofile für eine lösbare Verbindung durch Formschluss und/oder Kraftschluss zueinander passend ausgeführt sind. Dies erlaubt es mehrere Hülleinheiten mit zueinander passenden bzw. paarweise baugleichen Befestigungsprofilen lösbar aneinander zu Befestigen. Hierbei können die Befestigungsprofile insbesondere so ausgeführt bzw. gestaltet sein, dass diese in einer Verbindungsrichtung quer zur Längsrichtung miteinander verbindbar sind.

Insbesondere beim letztgenannten Beispiel können die Verschlussprofile und Befestigungsprofile zur Verbindung miteinander zusammenwirkende bzw. kompatible Profilelemente mit identischem Querschnitt aufweisen.

Bei baugleichen Befestigungsprofilen sei insbesondere an eine Leiste oder ein Profil gedacht, wobei die Hülleinheit an einer ersten Längsseite eine Leiste und an einer zweiten Längsseite ein Profil aufweisen kann und wobei die Leiste einer ersten Hülleinheit formschlüssig und/oder durch Kraftschluss mit dem Profil einer zweiten Hülleinheit verbunden werden kann. Dabei kann die erste Hülleinheit insbesondere baugleich mit der zweiten Hülleinheit ausgebildet sein oder z.B. eine abweichende Anzahl von Aufnahmen aufweisen.

In einem Beispiel weist die Hülleinheit an einer Längsseite ein erstes Befestigungsprofil und an der anderen Längsseite ein zweites Befestigungsprofil auf, welche komplementär oder konjugiert bzw. zueinander passend aber voneinander verschieden gestaltet sind wobei die Befestigungsprofile für eine lösbare Verbindung durch Formschluss und/oder Kraftschluss zueinander passend ausgeführt sind um mehrere baugleiche Hülleinheiten lösbar aneinander zu Befestigen.

Die vorgeschlagene Hülleinheit selbst kann vorteilhaft ferner eines oder mehrere der diese weiterbildenden Merkmale nach einem der Unteransprüche 2 bis 11 aufweisen. Weiterhin kann die Hülleinheit mehrere oder genau eine rohrförmige Aufnahme zur getrennten Führung von jeweils mindestens einer Leitung oder eines Leitungsstranges bilden. Dieses Beispiel ist vorteilhaft, wenn die Hülleinheit in Umfangsrichtung um die Aufnahme geschlossen hergestellt ist, sodass ein Austreten von Partikeln am Betriebsort zuverlässig vermieden wird.

### UNABHÄNGIGER ASPEKT (Endanschlüsse)

Weiterhin wird unabhängig vom Vorstehenden eine Verbesserung typischer Klemmvorrichtungen zum endseitigen Anschluss einer gattungsgemäßen Leitungsschutzführung für Reinräume vorgeschlagen. Dieser Aspekt fällt nicht unter den Wortlaut der Ansprüche, wird aber als das Verständnis der Erfindung erleichternd angesehen.

Eine bekannte Klemmvorrichtung umfasst ein erstes Klemmteil und ein zweites Klemmteil, wobei mindestens ein Klemmteil eine innenseitige Vertiefung zur Aufnahme eines Endbereichs einer Leitungsschutzführung und jeweils zwei gegenüberliegenden Stirnseiten quer zu einer Durchführrichtung, welche der Längsrichtung der Leitungsschutzführung entspricht, aufweist. Die Vertiefung mündet an mindestens einer ersten Stirnseite oder beiden Stirnseiten nach außen. Typisch wird in der Vertiefung bzw. innenseitig ein Druckstück vorgesehen das dazu dient bei geschlossener Klemmvorrichtung einen Endbereich der Leitungsschutzführung kraftschlüssig zu halten, z.B. zwischen zwei gegenüberliegenden Druckstücken.

Das Druckstück kann deformierbar ausgeführt sein und in Durchführrichtung über die erste Stirnseite des mindestens einen Klemmteils hervorstehen bzw. hervorragen, so dass das Druckstück an dieser Stirnseite einen Eckenschutz bereitstellt, welcher insbesondere zwischen der Leitungsschutzführung und dem jeweiligen Klemmteil für einen günstigeren, z.B. weicheren Übergang sorgt. Dabei wird der entsprechende Überstand zumindest an der Stirnseite vorgesehen, welche in Verlaufsrichtung (Längsrichtung der aufzunehmenden Leitungsschutzführung) dem entfernten Endbereich bzw. der anderen Klemmvorrichtung zugewandt ist, und insbesondere an der dem Inneren des Umlenkbogens entsprechenden Seite der Leitungsschutzführung.

In Versuchen wurde festgestellt, dass dieser Bereich zwischen Klemmvorrichtung und Leitungsschutzführung beim Betrieb in merkbaren Umfang Partikel freisetzt, was auf geringfügige Relativbewegungen zurückgeführt wird. Mit der vorgeschlagenen Bauweise, kann eine spürbare Verringerung unerwünschter Partikelabgabe durch die Leitungsschutzführung bzw. deren Umhüllung erzielt werden.

Bevorzugt ist in jedem Klemmteil mindestens ein Druckstück vorgesehen. Ungeachtet dessen kann jedes Druckstück aus einem gegenüber den Klemmteilen kompressiblen und/oder weicheren, insbesondere weichelastischen bzw. gummielastischen oder hartelastischen, Kunststoffmaterial hergestellt sein.

Geeignete Druckstücke können preiswert als Extrusionsprofile, insbesondere als Hohlkammer-Extrusionsprofile, hergestellt werden.

Eine weitere Verbesserung der Übergänge wird erzielt, wenn jedes Druckstück, zumindest im unbelasteten Zustand, an der vom Klemmteil abgewandten Innenseite welche im Montagezustand an der Leitungsschutzführung anliegt (im Querschnitt parallel zur Längs- bzw. Durchführrichtung gesehen) mindestens eine konvex gekrümmte bzw. ausgebauchte Oberfläche bildet.

Vorzugsweise werden die Druckstücke mit ihrer Längserstreckung senkrecht zur Durchführrichtung über die Gesamtbreite der Vertiefung verlaufend, insbesondere durchgehend einteilig, angeordnet.

Jedes Druckstück kann zwei abgerundete Schmalseiten aufweisen und vorzugsweise als symmetrisches Profil ausgeführt sein.

Zur einfachen Montage kann jedes Druckstück eine vorstehende Befestigungsrippe zur Befestigung in einer Quernut des Klemmteils aufweisen.

In einem Beispiel sind in jeder Aufnahme des mindestens einen Klemmteils zwei baugleiche Druckstücke nebeneinander aufgenommen sind, welche parallel und senkrecht zur Durchführrichtung, vorzugsweise mit Abstand zueinander, angeordnet sind. Dabei kann vorzugsweise das eine Druckstück an der einen Stirnseite und das andere Druckstück an der anderen Stirnseite des zugehörigen Klemmteils überstehen, sodass auch eine Kanten-Entschärfung zugunsten herausgeführter Leitungen erzielt wird.

Weitere Einzelheiten und Vorteile der Erfindung lassen sich, ohne Beschränkung der Allgemeinheit des Vorstehenden, der nachfolgenden Erläuterung bevorzugter Ausführungsbeispiele anhand der beigefügten Zeichnungen entnehmen. Hierbei zeigen:
- FIG.1A-1C:: ein erstes Ausführungsbeispiel einer verfahrbaren Leitungsschutzführung mit einer flexiblen Umhüllung, in Teilansicht eines Endbereichs, teilweise aufgebrochen (FIG.1A), im Querschnitt einzelner Hülleinheiten (FIG.1B) sowie in Frontansicht eines Endes mit einer endseitigen Klemmvorrichtung (FIG.1C);
- FIG.2:: ein weiteres Ausführungsbeispiel mit gegenüber FIG.1A-1C abgewandelten einzelnen Hülleinheiten in Querschnittsdarstellung (explodiert);
- FIG.3A-3B:: eine Weiterbildung mit Hülleinheiten gemäß FIG.2 und zusätzlichen Stützvorrichtungen, explodiert im Querschnitt (FIG.3B) und als perspektivische Teilansicht eines Endbereichs (FIG.3A);
- FIG.4A-4D:: ein weiteres Ausführungsbeispiel mit einer einteiligen Hülleinheit, die zur Bildung mehrerer Leitungsaufnahmen unterteilt ist, im geöffnet im Querschnitt (FIG.4A) und in Perspektivansicht (FIG.4B) und geschlossenen im Querschnitt (FIG.4C) und in Perspektivansicht mit endseitiger Klemmvorrichtung (FIG.4D);
- FIG.5:: ein Anwendungsbeispiel mit Ausführungsform nach FIG.4A-4D mit zwei parallel aneinander gekoppelten unterteilten Hülleinheiten und außenseitigen Stützketten im Querschnitt;
- FIG.6:: ein weiteres Ausführungsbeispiel mit gegenüber FIG.4-5 abgewandeltem Verschluss im Querschnitt;
- FIG.7A-7B:: ein weiteres Ausführungsbeispiel mit einzelnen umfänglich geschlossenen Hülleinheiten, welche durch seitliche Befestigungsprofile lösbar miteinander verbunden sind;
- FIG.8:: eine typische Anordnung einer Leitungsschutzführung bzw. Leitungsführungsreinrichtung in schematischer Seitenansicht; und
- FIG.9A-9D:: ein nicht als erfindungsgemäß beanspruchtes Beispiel mit Hülleinheiten, welche durch seitliche Befestigungsprofile lösbar miteinander verbunden sind;
- FIG.10A-10D:: ein weiteres Ausführungsbeispiel der Erfindung mit einer Hülleinheit, welche mehrere Aufnahmen aufweist, die einzeln befüllbar sind, sowie bevorzugter Querschnitte zugehöriger Funktionsbereiche;
- FIG.11-12:: weitere Ausführungsbeispiele als Varianten zu FIG.10A-10D;
- FIG.13A-13D:: ein Beispiel einer nicht beanspruchten Endbefestigungsvorrichtung mit Klemmteilen für eine verfahrbare Leitungsschutzführung mit flexibler Umhüllung, nach einem weiteren unabhängigen Teil der vorliegenden Offenbarung.
- FIG.14-16:: weitere Ausführungsbeispiele von Hülleinheiten;
- FIG.17:: eine Abwandlung eines Funktionsbereichs als Veschluss oder Befestigung; und
- FIG.18A-18B:: diverse Anordnungen mit Stützketten.

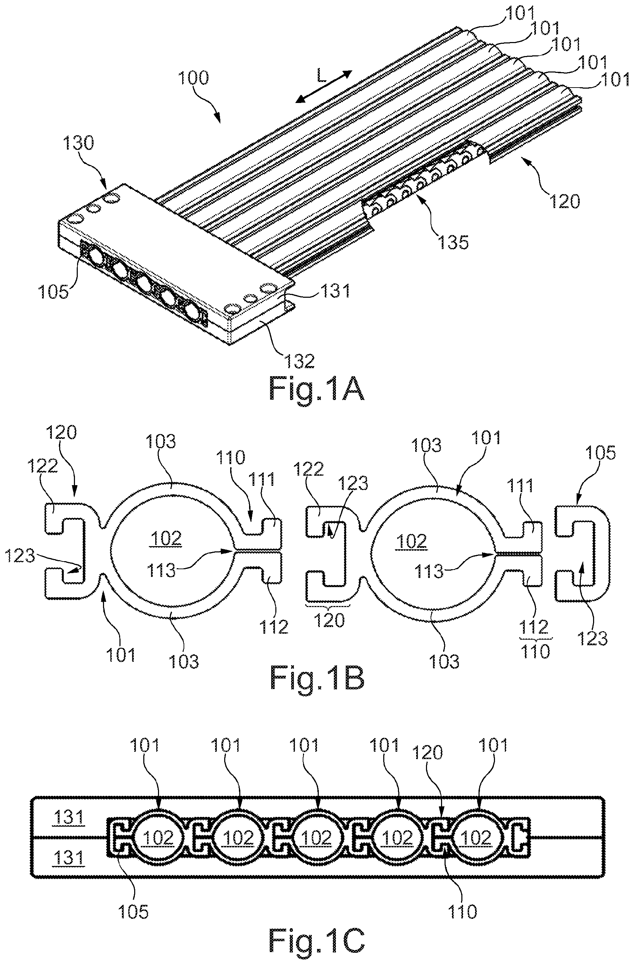

FIG.1A-1C zeigen schematisch ein erstes Ausführungsbeispiel einer hin und her verfahrbaren Leitungsschutzführung für Leitungen (nicht gezeigt). Diese hat eine langgestreckte, flexible Umhüllung 100, die aus einer Mehrzahl einzelner aus Kunststoff hergestellter Hülleinheiten 101 zusammengesetzt ist. Jede Hülleinheit 101 ist aus biegsamen weichelastischem Kunststoff, insbesondere einem Thermoplast, z.B. PE, PU, TPU, PTFE, expandiertes PTFE, PP oder dgl., hergestellt. Jede Hülleinheit 101 hat über ihre Länge einen durchgehend gleichbleibenden Querschnitt (FIG.1B) senkrecht zur Längsrichtung L. Die Hülleinheit 101 kann z.B. preiswert als Strangware in geeigneter Kunststoff-Extrusionstechnik hergestellt und auf eine geeignete Länge, z.B. von ca. 100mmm bis ca. 1500mm, abgelängt werden. Die baugleichen Hülleinheiten 101 bilden im Inneren eine im Wesentlichen zylindrische Aufnahme 102, zum geschützten Führen einer Leitung, und sind dazu rohrförmig mit im Verhältnis zum Querschnitt der Aufnahme 102 dünnwandigen Wandbereichen 103 ausgeführt. Die Aufnahmen 102 der flexiblen Umhüllung 100 sind räumlich voneinander getrennt, sodass kein Abrieb zwischen parallel darin geführten Leitungen entstehen kann.

Jede Hülleinheit 101 hat an einer Längsseite einen ersten Funktionsbereich 110, der in FIG.1A-1C aus zwei spiegelsymmetrisch konjugierten und getrennt gegenüberliegenden Verschlussprofilen 111, 112 besteht, die in Anlage gemeinsam einen Querschnitt etwa in T-Form bilden. Jedes Verschlussprofil 111, 112 ist in Längsrichtung L durchgehend und hier bspw. im Querschnitt etwa L-förmig. Die Verschlussprofile 111, 112 können, wie hier gezeigt, voneinander wegweisende L-Schenkel oder parallel nebeneinander bzw. ineinander liegende L-Schenkel bilden, zur Reduzierung der Höhe des Verschlusses. Zwischen den Verschlussprofilen 111, 112, insbesondere mittig dazwischen, weist die Hülleinheit 101 eine Schnittstelle bzw. in Längsrichtung L und radial durchgehende Öffnung 113 auf. Die spaltförmige Öffnung 113 einer losen bzw. abgetrennten Hülleinheit 101 (FIG.1B) kann durch Aufbiegen der Hülleinheit 101 geweitet werden, um eine mit Steckern vorkonfektionierte Leitung seitlich bzw. quer zur Längsrichtung L in die Aufnahme 102 einzufügen oder aus dieser zu entnehmen.

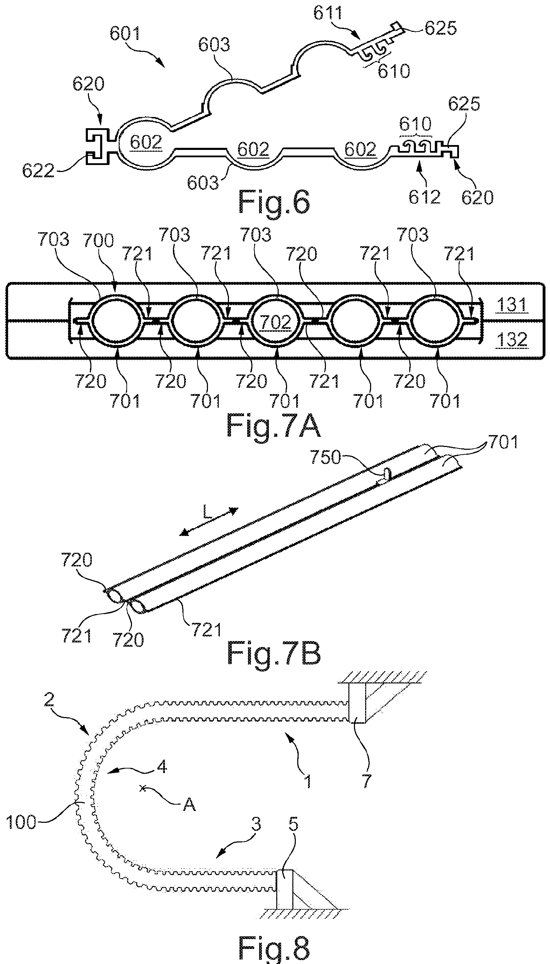

Die Hülleinheit 101 hat, diametral dem ersten Funktionsbereich 110 gegenüberliegend, einen zweiten Funktionsbereich 120 der aus einem Befestigungsprofil 122 besteht. Das Befestigungsprofil 122 ist in Längsrichtung L durchgehend und hat bspw. einen im Wesentlichen C-förmigen Querschnitt mit einer Innenkontur 123, die passend zur Außenkontur der geschlossenen Verschlussprofile 101, 112 des ersten Funktionsbereichs 110, insbesondere mit leichtem Untermaß für eine form- und kraftschlüssige Verbindung dimensioniert ist. Durch axiales Aufschieben des Befestigungsprofils 122 auf die Verschlussprofile 111, 112 einer benachbarten Hülleinheit 101 kann deren Öffnung 113 zumindest weitgehend partikeldicht verschlossen werden und zum Austausch einer Leitung leicht wieder geöffnet werden. Die Funktionsbereiche 110, 120 definieren, hier zusammen mit der Öffnung 113, durch ihre Symmetrie-Längsschnittebene die neutrale Faser der biegsamen Umhüllung 100, d.h. die Längsschnittebene, deren Länge bei Biegung bzw. im Umlenkbogen 4 (FIG.8) nicht verändert, d.h. keine Zug-/Schubspannung aufweist. Zudem wird durch die zusätzliche Wandstärke an den Funktionsbereichen 110, 120 eine vergleichsweise stabile und kontrollierter verfahrende Umhüllung 100 erzielt, ohne deren reversible Biegsamkeit spürbar zu beeinträchtigen.

FIG.1A und FIG.1C zeigen weiterhin eine von zwei endseitigen Klemmvorrichtungen 130 mit zwei Klemmteilen 131, 132, zwischen denen alle Hülleinheiten 101 der Umhüllung 100 mitsamt darin geführter Leitungen (nicht gezeigt) endseitig und in Axialrichtung staubdicht abgeschlossen sind, z.B. durch Spannschrauben. Die Klemmvorrichtungen 130 können zugleich eine Zugentlastung der Leitungen (nicht gezeigt) erzielen und in an sich bekannter Bauweise, z.B. ähnlich der hier insoweit einbezogenen Lehre aus DE 10 2012 100 290 B4, ausgeführt sein.

FIG.1A zeigt eine von zwei Stützketten 135 die in den Aufnahmen 102 der beiden seitlich äußeren Hülleinheiten 101 aufgenommen ist und aus einzelnen Kettengliedern besteht. Optionale Stützketten 135 können einerseits zum Schutz gegen Knicken den minimal zulässigen Radius des Umlenkbogens 4 (FIG.8) vorgeben und andererseits durch Anschlagen der Kettenglieder in Strecklage die freitragende Länge der Umhüllung 100 im beweglichen Trum, z.B. im Obertrum 1 (FIG.8), vergrößern.

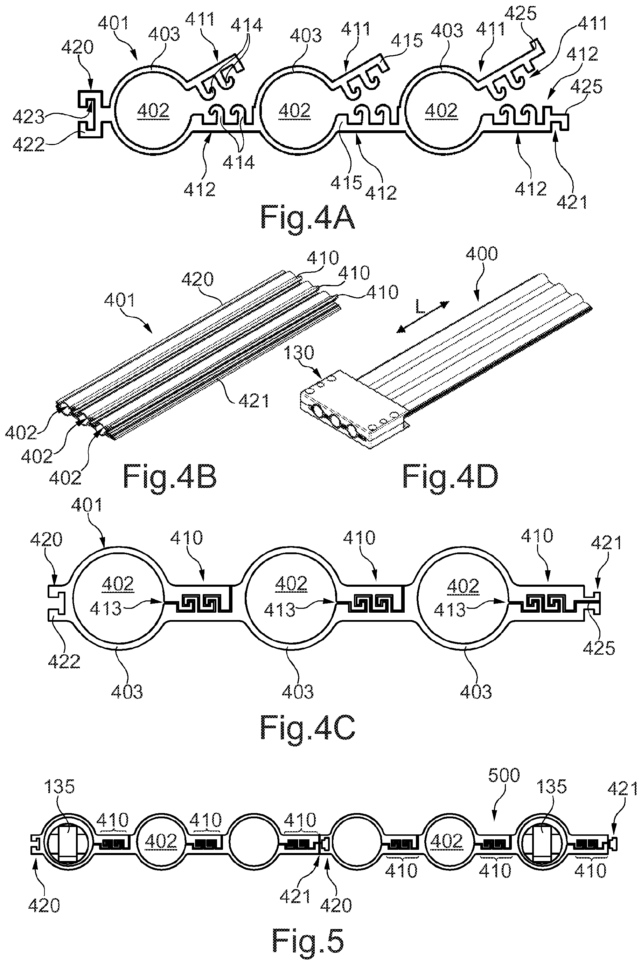

Wie in FIG.1B verdeutlicht, sind die gegenüberliegenden Verschlussprofile 111, 112 einteilig mit den rohrsegmentartigen Wandbereichen 103 der Hülleinheit 101 verbunden. Das Befestigungsprofil 122 ist ebenfalls einteilig mit dem oberen Wandbereich 103 und mit dem unteren Wandbereich 103 verbunden. Insbesondere die Verschlussprofile 111, 112 können, alternativ zu einer kostensparenden materialeinheitlichen Herstellung in einem Stück, separat aus einem geeigneten Kunststoff hergestellt sein und stoffschlüssig mit Wandbereichen 103 bzw. den Hülleinheiten 101 zu einem Werkstoffverbund verbunden werden, vorzugsweise durch Kunststoff-Schweißen. Der Querschnitt der Hülleinheiten 101 bzw. Wandbereiche 103 kann neben der gezeigten etwa kreisrunden Form auch eine länglich runde oder ovale Form haben. Die gezeigten Querschnittsformen der Verschlussprofile 111, 112 und des Befestigungsprofils 122 sind rein beispielhaft und können andersartig, bspw. überwiegend gerundet ausgeführt sein. Auch die Anzahl der parallel gekoppelten Hülleinheiten 101 nach FIG.1A-1C ist passend zur Anzahl gewünschter Leitungen beliebig wählbar bzw. dank der Funktionsbereiche 110, 120 nachträglich erweiterbar. Die Verschlussprofile 111, 112 können innenseitig zur Öffnung zusätzlich (hier nicht gezeigt) als Druckverschluss, z.B. nach dem Ziploc^{®} Prinzip, oder ähnlich ausgeführt sein um unerwünschtes Weiten der Öffnung 113 nach Abtrennen der benachbarten Hülleinheit 101 zu vermeiden (vgl. auch FIG.4A-4D).

FIG.1A-1C zeigen ferner eine Abschlussleiste 105 mit einer Innenkontur entsprechend dem Befestigungsprofil 122. Die Abschlussleiste 105 dient zum (bzgl. Austritt von Abriebpartikeln) dichten Verschließen der Öffnung 113 bzw. an einer Außenseite liegenden Verschlussprofile 111, 112 einer seitlich äußeren Hülleinheit 101, analog dem Befestigungsprofil 122.

FIG.1C veranschaulicht den vollständig geschlossenen Betriebszustand der Umhüllung 100, in welchem alle Befestigungsprofile 122 formschlüssig und/oder durch Kraftschluss, z.B. Klemmwirkung, mit den gegenüberliegenden und geschlossenen Verschlussprofilen 111, 112 verbunden sind und die zwischenliegende Öffnung 113 in Längsrichtung L durchgehend und staubdicht verschließen.

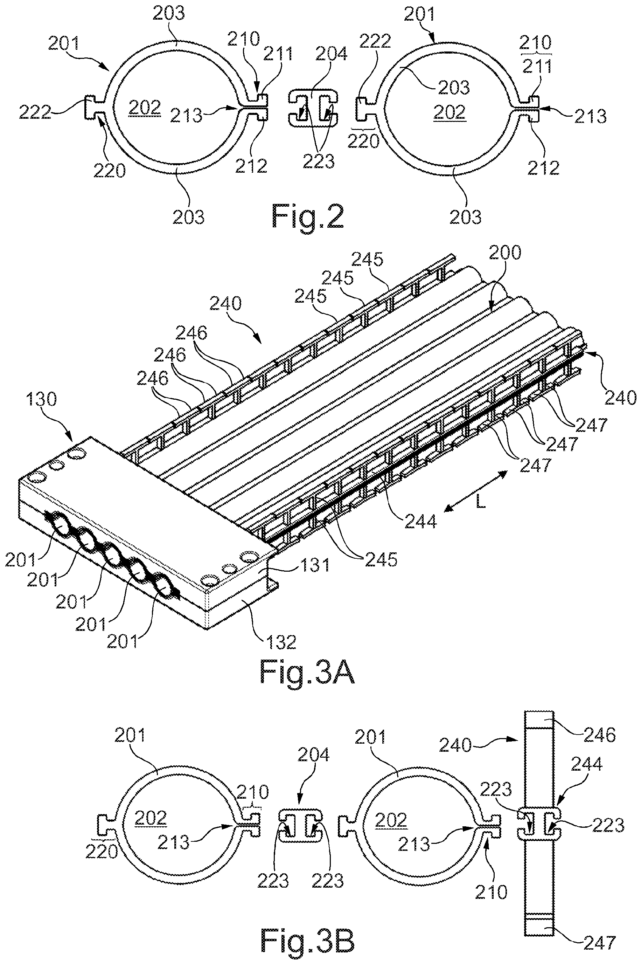

Merkmale mit zu FIG.1 entsprechender bzw. identischer Struktur oder Funktion haben in FIG.2-7 entsprechende Bezugszeichen und werden ggf. nicht wiederholt beschrieben.

FIG.2 zeigt eine bevorzugte, alternative Hülleinheit 201 mit zwei Funktionsbereichen 210, 220 zum Aufbau einer Umhüllung (FIG.1A-1C). Die Hülleinheit 201 unterscheidet sich gegenüber FIG.1A-1C vor allem durch andere Querschnittsform des Befestigungsprofils 222 im zweiten Funktionsbereich 220. Das Befestigungsprofil 222 ist in FIG.2 als Positivform bzw. männliches Formschlussteil mit Querschnitt z.B. in T-form, bis auf die Schnittstelle bzw. Öffnung 213 und entsprechend dem Querschnitt des ersten Funktionsbereichs 210 ausgeführt. So hat die Hülleinheit 201 zu beiden Längsmittelebenen, in FIG.2 vertikal und horizontal, einen weitgehend symmetrischen Querschnitt, bis auf die einseitige Öffnung 213. Entsprechende Symmetrie ist für eine gleichmäßige, torsionsfreie Biegung im Umlenkbogen 4 (FIG.8) günstig. Alternativ könnte der zweite Funktionsbereich 220 identisch zum ersten Funktionsbereichs 210, d.h. vollsymmetrisch mit einer Öffnung 213 an beiden Seiten, herzustellen. Dabei würde die Hülleinheit 201 aus zwei baugleichen Halbschalen (nicht gezeigt) zusammengesetzt, die z.B. durch Spritzguss-Verfahren herstellbar sind.

Weiterhin ermöglicht die Hülleinheit 201 ein Abtrennen ohne Öffnen der benachbarten Hülleinheit 201. Dies wird durch Befestigung benachbarter Hülleinheiten 201 (FIG.1C) jeweils anhand einer separaten Befestigungsleiste 204 erreicht. Die Befestigungsleiste 204 hat symmetrischem, durchgehend gleichförmigen Querschnitt, z.B. in H-Form bzw. Doppel-C-Form. Die Befestigungsleiste 204 hat beidseitig eine zu beiden Funktionsbereichen 210, 220 passende Innenkontur 223, hier als Negativform bzw. weibliches Formschlussteil. Die Befestigungsleiste 204 kann durch Formschluss und/oder Kraftschluss zwei Hülleinheiten 201 lösbar verbinden, wie FIG.2 zeigt. Zugleich dient die Befestigungsleiste 204 mit dem Funktionsbereich 210 zusammen als Verschluss zum staubdichten Schließen der Öffnung 213 zwischen den Verschlussprofil 211, 212. Auch andere Querschnitte, insbesondere der Funktionsbereiche 210, 220 und der Befestigungsleiste 204, können das Prinzip aus FIG.2 geeignet verwirklichen.

FIG.3A-3B zeigen einen weiteren Vorteil der symmetrischen Bauweise der Hülleinheit 201 aus FIG.2. Seitlich an den äußeren Hülleinheiten 201, d.h. den Schmalseiten der Umhüllung 200, kann jeweils eine baugleiche Stützvorrichtung 240 zum Stützen und definierten Führen der Hülleinheiten an den Funktionsbereichen 210, 220 angebracht werden, wie FIG.3B veranschaulicht. Hierzu hat die Stützvorrichtung 240 ein Tragband 244 mit einem Querschnitt entsprechend der Befestigungsleiste 204, d.h. passend zum Querschnitt der Funktionsbereiche 210, 220, z.B. beidseitige Nuten mit Innenkontur 223.

Die Stützvorrichtung 240 ist ausgeführt um den Umlenkradius des Umlenkbogens 4 (FIG.8) vorzugeben und ein freitragendes Trum 1 in Strecklage zu stützen, bzw. die mögliche freitragende Länge des Trums 1 zu vergrößern. Hierzu hat die Stützvorrichtung 240 quer zur Längsrichtung L beidseitig mit dem Tragband 244 geformte und senkrecht dazu stehende T-förmige Anschlagelemente 245 mit in Längsrichtung L der Umhüllung 200 stehenden T-Armen 246, 247. Die oben/unteren bzw. inneren/äußeren T-Arme 246, 247 sind unterschiedlich lang dimensioniert, so dass die T-Arme 247 im Umlenkbogen 4 radial innen beim gewünschten Radius anschlagen bzw. die T-Arme 246 in Strecklage im Anschlag stehen. Das Tragband 244 liegt vorzugsweise, wie die Befestigungsleiste 204 auf Höhe der neutralen Faser der flexiblen Umhüllung 200. Die Befestigungsleiste 204 und die Stützvorrichtung 240 sind aus flexiblem, biegeelastischen Kunststoff(en) hergestellt. Sie reiben nicht an den Leitungen und können daher bedarfsweise höhere Biegesteifigkeit als die Hülleinheiten 201 aufweisen, bspw. zur Einhaltung eines Radius im Umlenkbogen 4 bzw. Vergrößerung der freitragenden Länge. Weitere Einzelheiten zur Gestaltung der Stützvorrichtung 240 können, bis auf die Formgebung des Tragbands 244, der Lehre aus WO 2008/125087 A1 entsprechen.

In FIG.1-2 bildet jede Hülleinheit 101; 201 jeweils genau eine Aufnahme 102; 202 für eine oder ggf. mehrere Leitungen. FIG.4-6 zeigen Ausführungsbeispiele in denen die Umhüllung 400 jeweils eine einteilige Hülleinheit 401; 601 mit Unterteilungen zur Bildung mehrerer paralleler Aufnahmen 402; 602 in derselben Hülleinheit 401; 601.

FIG.4-5 zeigen eine alternative, einteilige Hülleinheit 401 mit bspw. drei parallelen Aufnahmen 402, die jeweils einzeln geöffnet (FIG.4A) und geschlossen (FIG.4C) werden können, um Leitungen einzubringen bzw. zu tauschen. Die Hülleinheit 401 ist einteilig als flexibles Kunststoff-Profil mit in Längsrichtung L durchgehend gleichbleibendem Querschnitt, wie in FIG.4 veranschaulicht, ausgeführt. Es kann z.B. aus einem Stück durch Extrusion hergestellt werden. Herstellungstechnische und materialbezogene Vorteile können sich ergeben, wenn die Funktionsbereiche, insbesondere Verschlussprofile 411, 412, separat und ggf. aus besonders geeignetem anderen Kunststoff hergestellt sind und nachträglich einteilig mit den Wandbereichen verbunden werden. Auch ein Mehrkomponenten-Herstellungsverfahren ist denkbar.

Die Hülleinheit 401 hat an den Schmalseiten zwei beidseitig gegenüberliegende Funktionsbereiche 420, 421 mit denen benachbarte Hülleinheiten 401 parallel miteinander verbunden werden können, wie in FIG.5 veranschaulicht. Die Funktionsbereiche 420, 421 haben in FIG.4-5 mit der Hülleinheit 401 einteilige Befestigungsprofile 422, 425 aufweist die zum Form- und Kraftschluss mit konjugiert ineinandergreifendem Querschnitt ausgeführt sind, z.B. ähnlich FIG.1. Das Befestigungsprofil 425 an der zu öffnenden Seite ist zweiteilig mit zwischenliegender Schnittstelle, z.B. analog dem Funktionsbereich 110 aus FIG.1A-1C, ausgeführt, mit Außenkontur passend zur Innenkontur 423 des Befestigungsprofils 422. Alternativ ist auch eine Befestigung mittels separater Befestigungsleisten, analog zu FIG.2-3 möglich.

Wie FIG.4A näher zeigt, ist an einer Seite jeder der mehreren Aufnahmen 402 derselben Hülleinheit 401, jeweils ein Funktionsbereich 410 mit einem gegenüberliegenden Paar zusammenwirkender Verschlussprofile 411, 412 einteilig mit der Hülleinheit 401 verbunden. Die Verschlussprofile 411, 412 erstrecken sich ebenfalls in Längsrichtung L mit gleichbleibendem Querschnitt und dienen dem (bzgl. Partikelgröße) dichten Schließen der jeweils zugehörigen Aufnahme 402 (FIG.4C). Die Verschlussprofile 411, 412 können als Verschlussleiste, umfassend zumindest formschlüssig ineinandergreifende Profilelementen 414, z.B. mit Widerhakenform im Querschnitt, nach dem Prinzip eines geeigneten Druckverschlusses, oder dgl. ausgeführt sein. Stützbereiche 415 dienen dem formschlüssigen Verrasten der Profilelemente 414 im geschlossenen Zustand (FIG.4C). Anhand zugeordneter Verschlussprofile 411, 412 können die Aufnahmen 402 bedarfsweise einzeln geöffnet und dicht geschlossen werden. Öffnen kann durch Aufbiegen des flexiblen Wandbereichs 403 erfolgen. FIG.4-5 zeigen einen Funktionsbereich 410 der als robuster Doppelverschluss mit jeweils zwei Profilelementen 414 an jedem Verschlussprofil 411, 412 ausgeführt ist, z.B. um unerwünschtes Öffnen im Betrieb auszuschließen. Ungewolltes Öffnen lässt sich jedoch bereits vermeiden, wenn die zu öffnende Breitseite der Umhüllung 400 im Umlenkbogen 4 radial innen liegt. Die Schnittstelle der Öffnung 413 zwischen den Verschlussprofile 411, 412 ist auf Höhe der neutralen Faser angeordnet, vgl. FIG.4C.

FIG.5 zeigt eine Umhüllung 500 aus zwei Hülleinheiten 401, die anhand ihrer seitlichen Funktionsbereiche 420, 421 bzw. deren Befestigungsprofile 422, 425 lösbar und parallel aneinander befestigt sind. In den beiden seitlich äußeren Aufnahmen 402 kann, z.B. bei einer großen Länge, jeweils eine Stützkette 135, wie zu FIG.1A beschrieben, angeordnet sein.

FIG.6 zeigt eine Variante zu FIG.4-5 mit einer Hülleinheit 601 welche für alle Aufnahmen 602 gemeinsam lediglich einen Verschluss hat. Dazu ist nur ein Funktionsbereich 610 mit zusammenwirkenden Verschlussprofilen 611, 612 an einer Schmalseite vorgesehen. Die Wandbereiche 603 sind an beiden Breitseiten der Hülleinheit 601 plattenartig zusammenhängend ausgeführt. Ansonsten entspricht die Hülleinheit 601 der Hülleinheit 401.

FIG.7A-7B zeigen ein weiteres bevorzugtes Ausführungsbeispiel einer Umhüllung 700, die aus einer Mehrzahl einzelner, baugleicher Hülleinheiten 701 aufgebaut ist, die jeweils genau eine Aufnahme 702 bilden. Im Gegensatz zu FIG.1-6 sind die Hülleinheiten 701 in Längsrichtung L und in Umfangsrichtung geschlossen, d.h. mit unterbrechungsfrei um die Aufnahme 702 umlaufender Hüllwand 703 ausgeführt. Die Hüllwand 703 ist bspw. in Rohrform, Schlauchform oder dgl. mit etwa ovalem oder rundem Querschnitt ausgeführt. Die Hülleinheiten 701 sind zumindest überwiegend aus flexiblem, dauerelastisch biegsamen Kunststoff hergestellt.

Die Hülleinheiten 701 können nicht zerstörungsfrei geöffnet werden, d.h. Leitungen müssen, anders als bei FIG.1-6, axial bzw. in Längsrichtung durchgeführt werden. Ein ungewolltes Austreten von Partikeln während Wartungsarbeiten kann dadurch vermieden werden. Eine Vereinfachung der Wartung und Erweiterbarkeit wird mit den Hülleinheiten 701, ohne Verschlussfunktion an den Aufnahmen 702, allein durch das Konzept der Befestigungsfunktion bzw. nur zur parallelen Befestigung einzelner Hülleinheiten 701 zusammenwirkende Funktionsbereiche 720, 721 erzielt.

Jede Hülleinheit 701 nach FIG.7A-7B hat beidseitig diametral gegenüberliegend mit der geschlossenen Hüllwand 703 hergestellte oder nachträglich mit dieser verbundene und in Längsrichtung L erstreckte Funktionsbereiche 720, 721. Die Funktionsbereiche 720, 721 weisen jeweils als Befestigungsband ein Befestigungsprofil oder eine Befestigungsleiste für eine lösbare Verbindung durch Formschluss und/oder Kraftschluss auf. Die Funktionsbereiche 720, 721 sind zusammenwirkend ausgeführt, zum bedarfsweise Lösen bzw. Anbringen einer Hülleinheit 701 an bzw. von einer angrenzenden Hülleinheit 701. FIG.7B zeigt beispielhaft zwei verbundene Hülleinheiten 701 gezeigt. Es können z.B. Befestigungsprofile als Funktionsbereiche 720, 721 verwendet werden, die in Längsrichtung L gleichbleibenden Querschnitt haben, um eine Extrusion zu ermöglichen. Die Funktionsbereiche 720, 721 verlaufen auch hier bandförmig in einer Ebene gegenüberliegend an zwei Seiten entlang der Hüllwand 703. Die Befestigungsbänder der Funktionsbereiche 720, 721 können in Art eines verzahnten Reißverschlusses, eines zahnlosen Gleitverschlusses oder dgl. ausgeführt sein. Die Funktionsbereiche 720, 721 wirken zur Befestigung zusammen ggf. auch mit einer separaten Befestigungsleiste, wie in FIG.2, welche die Befestigungsprofile bzw. Befestigungsleiste verbindet. FIG.7B zeigt schematisch einen Verschluss-Schieber 750 zum Verbinden/Trennen Veranschaulichung von Funktionsbereichen 720, 721 die zur Befestigung der Hülleinheiten 701, rein beispielhaft, z.B. als formschlüssiger, zahnloser Gleitverschluss ausgeführt sind. Die Funktionsbereiche 720, 721 können separat, z.B. durch Extrusion oder Spritzguss hergestellt und einteilig mit dem restlichen Profil der Hülleinheit 701 verbunden werden, z.B. in geeigneter Technik in Längsrichtung durchgehend angeschweißt werden. Bevorzugt sind dazu die Hüllwand 703 und die Funktionsbereiche 720, 721 aus einem Thermoplast hergestellt.

Benachbarte Führungskanäle bzw. Aufnahmen 102... 902 sind im Ergebnis durch bandartige Zwischenbereiche aneinander befestigt, welche zumindest an einigen Aufnahmen 102... 902 einen Funktionsbereich aufweisen, der die Wartung vereinfacht und/oder eine nachträgliche Veränderung der Umhüllung erleichtert.

Die biegeelastischen Hülleinheiten 101... 901 können materialeinheitlich aus nur einem Kunststoff hergestellt sein, insbesondere mehrteilig aus separaten Bereichen die anschließend stoffschlüssig verbunden, insbesondere mitaneinander verschweißt, werden. Die Hülleinheiten 101... 901 können ggf. mehrlagig bzw. mit Beschichtung, z.B. mit einem äußeren Spezialkunststoff zur Reibungsverringerung an den Breitseiten, hergestellt sein.

FIG.8 zeigt schematisch einen Verlauf einer dynamischen Leitungsführung mit staubdichter Umhüllung 100, z.B. nach einer der FIG.1-7, die ein bewegliches Obertrum 1 und ein stationäres Untertrum 3 bildet. Dazwischen bildet die Umhüllung 100 einen Umlenkbogen 4 mit vorgegebenem Biegeradius um eine gedachte Achse A. Der Umlenkbogen 4 verfährt über eine Strecke relativ zu einem feststehenden Anschluss 5 wenn der Obertrum 1 mit dem beweglichen Anschluss 7 verfahren wird. Die Raumlage ist jedoch beliebig, die Umhüllung 100 kann auch vertikal oder seitlich verfahren. Die beiden Enden der Umhüllung 100 sind mit staubdicht verschlossen, z.B. mit Klemmvorrichtungen nach FIG.1A. Die Umhüllung 100 ist insgesamt schlauchartig und ausreichend flexibel ausgeführt, u.a. durch geeignete Gestaltung und/oder Materialwahl, um eine reversibel biegsame Krümmung des Umlenkbogens 4 mit geringem Kraftaufwand zu erlauben und der Fahrbewegung des beweglichen Anschluss 7 mit möglichst geringem Widerstand zu folgen.

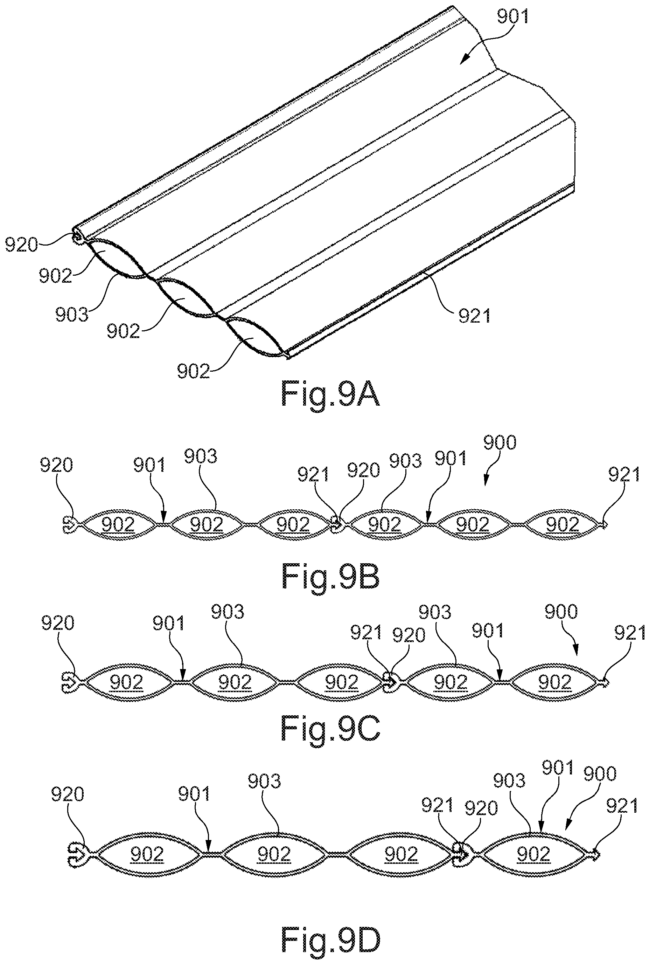

FIG.9A-9D zeigen schematisch eine Umhüllung 900, die aus einer Mehrzahl einzelner Hülleinheiten 901 aufgebaut ist. Die Hülleinheiten 901 bilden jeweils eine oder mehrere Aufnahmen 902. Im Gegensatz zu FIG.1-6 sind die Hülleinheiten 901 in Längsrichtung L und in Umfangsrichtung geschlossen, d.h. mit unterbrechungsfrei um die eine oder mehrere Aufnahmen 902 umlaufender Hüllwand 903 ausgeführt. Die Hüllwand 903 ist bspw. in Rohrform, Schlauchform oder dgl. mit etwa linsenförmigem (Engl. lens-shaped) bzw. spitzovalem (Engl. vesica piscis / doublepointed oval), oder auch ovalem, langrundem oder rundem Querschnitt ausgeführt. Bevorzugt wird der linsenförmige Querschnitt nach FIG.9A-9D zur Gestaltung der Aufnahmen 902 verwendet. Dieser kann insbesondere aus zwei gleichen Kreissegmenten gebildet sein, welche an ihren Sehnen symmetrisch zur neutralen Faser zusammengesetzt sind. Diese Querschnittsform mindert Faltenbildung d.h. Abrieb im Umlenkbogen. Die Hülleinheiten 901 sind zumindest überwiegend aus flexiblem, dauerelastisch biegsamen Kunststoff hergestellt, insbesondere extrudiert, z.B. aus expandiertem PTFE.

Hülleinheiten 901 nach FIG.9A-9D können nicht zerstörungsfrei geöffnet werden, d.h. Leitungen müssen, anders als bei FIG.1-6, axial bzw. in Längsrichtung durchgeführt werden. Ein ungewolltes Austreten von Partikeln während Wartungsarbeiten kann dadurch aber zuverlässig vermieden werden. Eine Vereinfachung der Wartung und Erweiterbarkeit wird mit den Hülleinheiten 901, ohne Verschlussfunktion an den Aufnahmen 902, allein durch das Konzept der Befestigungsfunktion bzw. die zur parallelen Befestigung einzelner Hülleinheiten 901 zusammenwirkenden Funktionsbereiche 920, 921 erzielt. Hierbei kann jede Hülleinheit 901 z.B. einen zusammengehörenden Leitungsstrang aufweisen, um ein mit Steckern oder dgl. vorkonfektionierten Leitungsstrang unabhängig von einem abweichenden Leitungsstrang mittels Austausch einer Hülleinheit 901 zu erneuern.

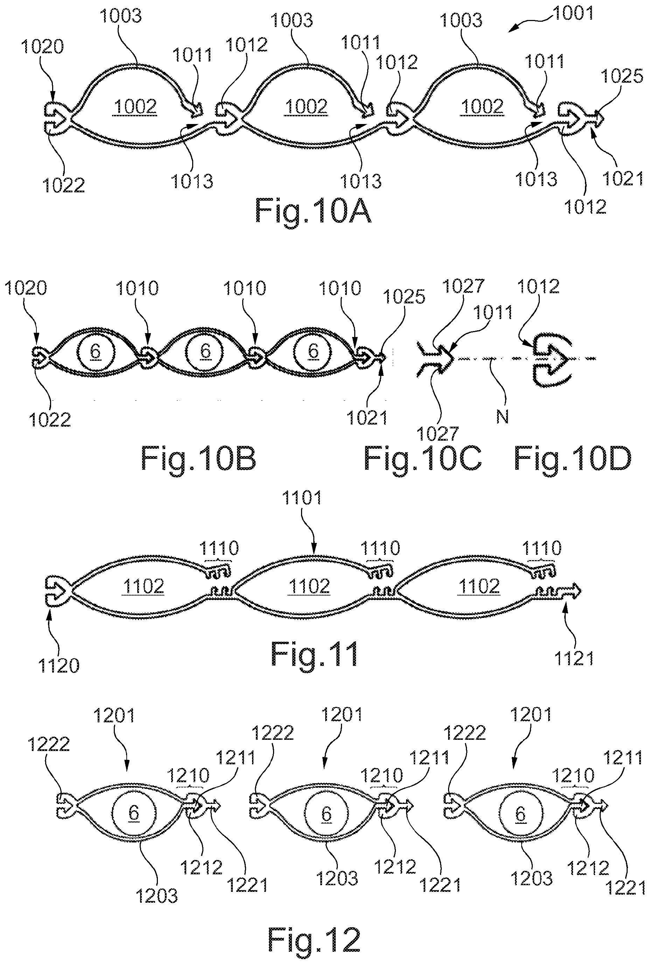

Jede Hülleinheit 901 nach FIG.9A-9D hat beidseitig diametral gegenüberliegende und mit der geschlossenen Hüllwand 903 entweder einteilig hergestellte oder nachträglich mit dieser verbundene und in Längsrichtung L durchgehend erstreckte Funktionsbereiche 920, 921. Die Funktionsbereiche 920, 921 weisen jeweils als Befestigungsband ein Befestigungsprofil und/oder eine Befestigungsleiste für eine lösbare Verbindung durch Formschluss und/oder Kraftschluss auf. Die Funktionsbereiche 920, 921 sind zusammenwirkend ausgeführt, zum bedarfsweise Lösen bzw. Anbringen einer Hülleinheit 901 an bzw. von einer angrenzenden Hülleinheit 901. Eine geeignete Bauweise wird zu FIG.10A-10D unten erläutert.

FIG.9B-9D zeigen beispielhaft zwei verbundene Hülleinheiten 901, wobei eine erste Hülleinheit 901 drei Aufnahmen 902 bildet. In FIG.9B weist eine zweite Hülleinheit 901 ebenfalls drei Aufnahmen 902 auf. In FIG.9C weist die zweite Hülleinheit 901 zwei Aufnahmen 902 und in FIG.9D eine Aufnahme 902 auf. Durch verschiedene Anzahl von Aufnahmen 902, welche von einer Hülleinheit 901 gebildet werden, wird eine Anpassung einer Hülleinheit 901 an einen Leitungsstrang (nicht abgebildet) möglich, insbesondere an die Anzahl der Leitungen (nicht abgebildet) innerhalb eines Leitungsstrangs (nicht abgebildet). So wird durch eine bedarfsgerechte Konfiguration von Hülleinheiten 901 mit angepasster Anzahl von Aufnahmen 902 innerhalb einer Umhüllung 900 ermöglicht, dass ein einzelner Leitungsstrang (nicht abgebildet) bedarfsgerecht durch den Austausch einer Hülleinheit 901 ausgetauscht werden kann.

Es können z.B. Befestigungsprofile als Funktionsbereiche 920, 921 verwendet werden, die in Längsrichtung L gleichbleibenden Querschnitt haben, um eine Extrusion zu ermöglichen. Die Funktionsbereiche 920, 921 verlaufen auch hier bandförmig in einer Ebene gegenüberliegend an zwei Seiten entlang der Hüllwand 903. Die Befestigungsbänder der Funktionsbereiche 920, 921 sind in Art eines Verschlusses mit ineinandergreifenden Befestigungsprofilen, ähnlich z.B. Druckverschlussbeuteln oder vorzugsweise Ziehverschlussbeuteln, ausgeführt. Die Funktionsbereiche 920, 921 wirken hier zur Befestigung zusammen ggf. auch mit einer separaten Befestigungsleiste, wie in FIG.2, welche die Befestigungsprofile bzw. Befestigungsleiste verbindet.

Bevorzugt werden die Funktionsbereiche 920, 921 einstückig mit den Hüllwänden 903 im Extrusionsverfahren hergestellt, entweder materialeinheitlich oder aus verschiedenen Kunststoffen, z.B. mit einem flexiblen aber festerem bzw. härterem Kunststoff für die Funktionsbereiche 920, 921. Die Funktionsbereiche 920, 921 können separat, z.B. durch Extrusion oder Spritzguss hergestellt und einteilig mit dem restlichen Profil der Hülleinheit 901 verbunden werden, z.B. in geeigneter Technik in Längsrichtung durchgehend angeschweißt werden. Bevorzugt sind dazu die Hüllwand 903 und die Funktionsbereiche 920, 921 aus einem Thermoplast hergestellt.

FIG.10A-10D zeigen ein besonders bevorzugtes weiteres Beispiel einer Hülleinheit 1001, welche eine Variante des Prinzips aus FIG.4A-4D darstellt. Die Hülleinheit 1001 ist auch hier aus flexiblem biegsamen Kunststoff hergestellt, vorzugsweise extrudiert und hat mehrere, z.B. drei Aufnahmen 1002 für Leitungen 6 im geschlossenen Zustand (FIG.10B). Dabei hat die Hülleinheit 1001 für jede Aufnahme 1002 eine jeweils eigene bzw. zugeordneten 1010 Funktionsbereich, der als Verschluss ausgeführt ist, hier insbesondere als bandartige Verschlussleiste mit zwei konjugiert ineinandergreifenden Verschlussprofilen bzw. Eingriffsprofilen, nämlich einem Hakenprofil 1011, das in ein Klauenprofil 1012 eingreifen kann. Das Hakenprofil 1011 und das Klauenprofil 1012 sind jeweils mit mindestens einer Hinterschneidung, vorzugweise zwei symmetrischen Hinterschneidungen versehen und greifen mit Widerhaken-Funktion ineinander, d.h. sind relativ leicht zu schließen bzw. verbinden aber nur mit deutlich höherem Kraftaufwand zu lösen.

Weiterhin hat die Hülleinheit 1001 an beiden gegenüberliegenden Schmalseiten ebenfalls jeweils einen Funktionsbereich 1020 bzw. 1021 der zur modularen Befestigung mehrerer Hülleinheiten 1001 mit entsprechend baugleichen Funktionsbereichen 1020 bzw. 1021 in einer Lage seitlich nebeneinander oder an einer Stützvorrichtung (vgl. FIG.3A) dient. Die Befestigungsbänder bzw. -streifen 1020, 1021 sind hier ebenfalls als Klauenprofil 1022 bzw. Hakenprofil 1025 ähnlich oder baugleich den Verschluss-Funktionsbereichen 1010 ausgeführt.

FIG.10C-10D zeigen schematische vergrößerte Querschnittsdarstellungen des Hakenprofils 1011 bzw. des Klauenprofils 1012, welche baugleich auch für die Verschluss-Funktionsbereiche 1020 bzw. 1021 verwendbar sind. Das Hakenprofil 1011 und das Klauenprofil 1012 haben in Längsrichtung (senkrecht zur Ebene der FIG.10C-10D) durchgehend gleichbleibenden Querschnitt und sind als flexible Streifen bzw. Bänder ausgeführt, die im Umlenkbogen 4 (FIG.4) um die Achse A biegsam sind. Das Hakenprofil 1011 ist bzgl. der neutralen Faser N als symmetrisches Doppelhaken-Profil ausgeführt, z.B. wie hier gezeigt in Pfeilkopf-Form, Pilzkopf-Form oder dgl. und weist jeweils entsprechende rückseitige Hinterschneidungen bzw. Hinterschnitte auf. Die Rückseiten 1027 können gegenüber der Symmetrieebene und der Verbidungsrichtung schräg in einem Winkel nach hinten verlaufen, um die Wirkung als Widerhaken zu verstärken bzw. ungewolltes Lösen zuverlässig zu vermeiden. Das Klauenprofil 1012 ist entsprechend im Querschnitt symmetrisch zur neutralen Faser N. Das Klauenprofil 1012 hat eine innere Aufnahme passend bzw. konjugiert zum Hakenprofil 1011 mit passendem Querschnitt und Hinterschneidungen, wobei die Aufnahme mit Untermaß ausgeführt sein kann um Kraftschluss zu erzielen. Um diese Aufnahme bildet das Klauenprofil 1012 zwei klauenartige Leisten bzw. Streifen, welche wie ein Fangmaul das Hakenprofil 1011 hintergreifen und festhalten. Auch andere Bauformen eines Hakenprofils 1011 bzw. eines Klauenprofils 1012 insbesondere wie bei zahnlosen Reißverschlüssen, insbesondere Zieh-, Gleit- oder Druckverschlüssen, aus Kunststoff bekannt kommen in Betracht. Die vorstehende Bauweise ist sinngemäß für die Befestigungs-Funktionsbereiche 1020, 1021 anwendbar. Bevorzugt werden Reißverschlüsse 1010 bzw. 1020, 1021 mit ineinandergreifenden Teilen, die einen im Wesentlichen gleichmäßigen Querschnitt über ihre gesamte Länge aufweisen und ohne Schieber bedient werden, da diese Bauform einfach im Extrusionsverfahren realisierbar ist. Es kann auch ein geeigneter Schieber als Werkzeug bzw. Hilfe zum Öffnen oder Schließen vorgesehen sein.

Eine Anordnung der Verschluss-Funktionsbereiche 1010 und Befestigungs-Funktionsbereiche 1020 bzw. 1021 auf Höhe der neutralen Faser N wie in FIG.10A-10D ist besonders vorteilhaft. Die neutrale Faser N, auch Nulllinie genannt, ist die Schicht des Querschnitts, deren Länge sich bei Biegung, insbesondere beim Verfahren des Umlenkbogens 4 (FIG.8) nicht ändert, d.h. die bei Krümmung eine konstante Abmessung in Längsrichtung erhaltende Schicht.

Wie aus FIG.10C-10D besonders gut ersichtlich, sind die Befestigungs-Funktionsbereiche 1020 bzw. 1021 in einer Verbindungsrichtung V, welche senkrecht zur Längsrichtung L liegt relativ leicht miteinander verbindbar, wobei die Verbindungsrichtung V hierbei im Wesentlichen in der Ebene der neutralen Faser N liegen kann. Entgegen der Richtung V sind die Befestigungs-Funktionsbereiche 1020 bzw. 1021 jedoch nur sehr schwer lösbar, sodass kein ungewolltes Lösen im Betrieb auftritt.

Die Verschluss-Funktionsbereiche 1010 und Befestigungs-Funktionsbereiche 1020 bzw. 1021 können materialeinheitlich mit den Wänden der Aufnahmen 1002 hergestellt sein oder aus einem vergleichsweise biegesteiferen Kunststoff z.B. im Koextrusionsverfahren, bspw. um die Stabilität der Verbindungen und der Hülleinheit 1001 insgesamt zu erhöhen.

FIG.11 zeigt eine Abwandlung mit einer Hülleinheit 1101, bei welcher die Befestigungs-Funktionsbereiche 1120 bzw. 1121 nach dem Prinzip aus FIG.10A-10D ausgeführt sind. Die Verschluss-Funktionsbereiche 1110 hingegen sind als Doppelhaken-Eingriffsprofile nach dem Prinzip aus FIG.4A-4C ausgeführt. Hierbei ist anzumerken, dass die Darstellung in FIG.4A-4C nicht maßstabgetreu ist, da die Verschluss-Funktionsbereiche 410 dort stark vergrößert dargestellt sind. Typisch weisen die Funktionsbereiche 1010, 1020 bzw. 1021 oder 1110, 1120 bzw. 1121 eine Bauhöhe im Querschnitt im Millimeterbereich, z.B. von ca. 1mm bis ca. 3mm auf.

FIG.12 zeigt wiederum eine Abwandlung gegenüber FIG.10A-10D mit dem wesentlichen Unterschied, dass jede Hülleinheit 1201 aus FIG.12 genau eine Aufnahme bildet, die einzeln öffenbar und verschließbar ist. Nebst einem entsprechenden Verschluss-Funktionsbereich 1210, mit Hakenprofil 1212 und Klauenprofil 1212 analog zu FIG.10A-10D, an jeder Aufnahme hat in FIG.12 jede einzelne Aufnahme auch beidseitig an jeder Schmalseite ein eigenes Befestigungsprofil, z.B. ein Klauenprofil 1222 bzw. ein Hakenprofil 1212.

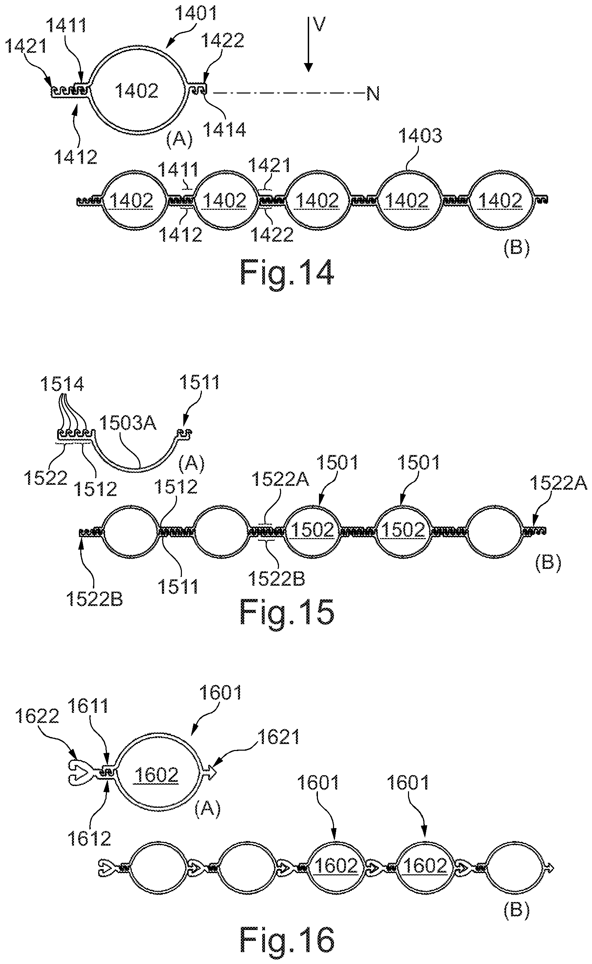

FIG.14 zeigt eine Weiterbildung, mit Umhüllungen 1402 mit je nur einer Aufnahme 1402, bei welcher Verschlussprofile 1411, 1412 als Verschlussleisten vorgesehen sind, die je zwei zusammenwirkende formschlüssig ineinandergreifende Profilelemente 1414 aufweisen. Diese Profilelemente 1414 sind z.B. mit Widerhakenform im Querschnitt, nach dem Prinzip eines geeigneten Druckverschlusses oder dgl. ausgeführt, analog zu FIG.4A bzw. FIG.6. Anhand zugeordneter Verschlussprofile 1411, 1412 können die Aufnahmen 1402 auch hier bedarfsweise einzeln geöffnet und staubdicht geschlossen werden zum Austausch einer Leitung oder Stützkette. Die Verschlussprofile 1411, 1412 haben eine doppelte Verzahnungsleiste mit je zwei ineinandergreifenden parallelen Hakenleisten bzw. Profilelementen 1414 für eine sichere, feste Verbindung im geschlossenen Zustand der Aufnahmen 1402 (FIG.14B). Weiterhin hat jede Umhüllung 1401 seitlich neben den Verschlussprofilen 1411, 1412 angeordnet und ebenfalls in Längsrichtung durchgehend mit gleichbleibendem Profil zwei zusammenwirkende Befestigungsbänder bzw. -Profile 1421, 1422. Die Befestigungsprofile 1421, 1422 haben hierbei dieselbe Bauform bzw. denselben Querschnitt wie die Verschlussprofile 1411, 1412. In dem Beispiel nach FIG.14A-14B kann die Hüllwand 1403 nach Öffnen der Verschlussprofile 1411, 1412 aufgebogen werden. Unabhängig hiervon können einzelne Umhüllungen 1401 über die Befestigungsprofile 1421, 1422 miteinander verbunden oder voneinander gelöst werden. In Abweichung von FIG.9-10 und FIG.13 ist die Verbindungsrichtung V der Befestigungsprofile 1421, 1422 hier jedoch nicht in der neutralen Faser liegend, sondern senkrecht zur neutralen Faser N gerichtet, und liegt auch hier in der Ebene senkrecht zur Längsrichtung, wie FIG.14B veranschaulicht.

Als Variante zu FIG.14 zeigt FIG.15 eine im montierten Zustand vergleichbare Bauform, bei welcher jede Umhüllung 1501 aus zwei Halbschalen 1503A zusammengesetzt ist, welche jeweils zwei Verschlussprofile 1511, 1512 und nur ein Befestigungsprofil 1521 aufweisen. Zwei verbundene Halbschalen 1503A, wie in FIG.15B gezeigt sind jedoch wiederum über jeweils zwei seitliche, funktional getrennte Befestigungsbänder 1521A, 1521B aneinandergekoppelt bzw. miteinander verbunden.

In der Variante nach FIG.16 entsprechen die Verschlussprofile 1611, 1612 denjenigen aus FIG.14-15 bzw. FIG.4 oder FIG.6, die Befestigungsbänder 1621, 1622 hingegen haben das in Verbindungsrichtung V steckbare Haken- und Klauenprofil aus FIG.9 bzw. FIG.10C-10D.

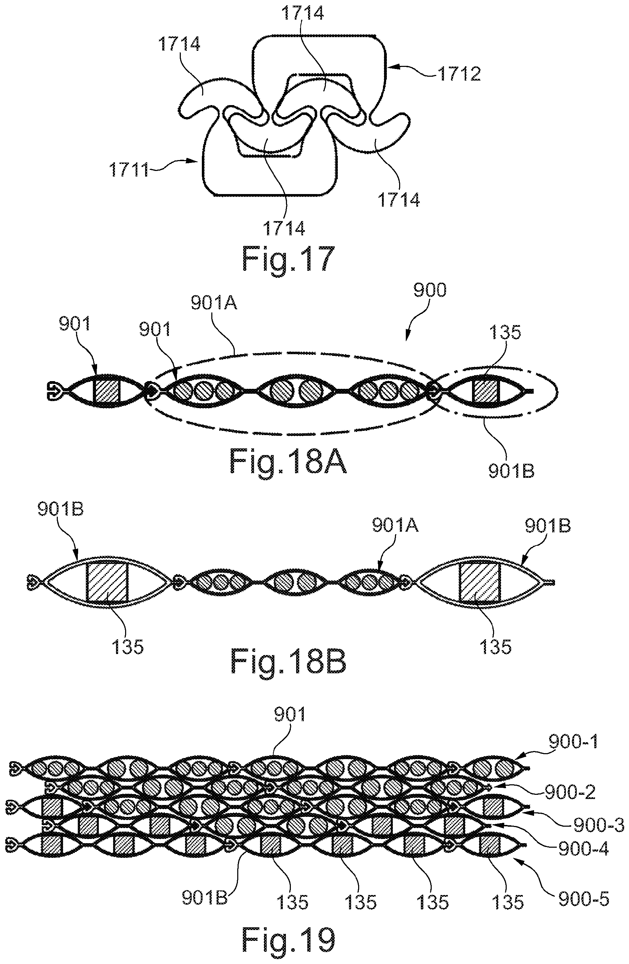

Als mögliche Weiterbildung, insbesondere der Verschlussprofile aus FIG.14-16 bzw. FIG.4 oder FIG.6, zeigt FIG.17 in vergrößertem Prinzipschema ein weiteres Funktionsprofil mit zusammenwirkenden Funktionsbereichen 1711, 1712 nach dem Prinzip eines geeigneten Druck- oder Ziehverschlusses. Hierbei sind die einzelnen Hakenleisten bzw. Verschlussprofil-Elemente 1714 im Querschnitt identisch, jeweils mit spiegelsymmetrischer Pilzkopf- oder DoppelT-Form oder dgl. ausgeführt und greifen als Doppelreihen hakenartig ineinander bzw. hintereinander. Bei einer derartigen Ausführung sind gesonderte Stützbereiche 415 wie in FIG.4 nicht erforderlich. Die Funktionsbereiche 1711, 1712 aus FIG.17 können, wie z.B. in FIG.14-15, auch als Befestigungsprofile eingesetzt werden. Zum Lösen oder Verbinden der Funktionsbereiche 1711, 1712 kann ein Verschluss-Schieber 750 (vgl. FIG.7B) vorgesehen werden.

FIG.18A-18B zeigen diverse Anordnungen von Umhüllungen mit Hülleinheiten 901, z.B. analog zu FIG.9. In FIG.18A sind die beiden äußeren, seitlichen Hülleinheiten 901 eigens zwei schematisch gezeigten Stützketten 135 zugeordnet, sodass diese mit ihrer zugeordneten Umhüllung 901 separat austauschbar sind. Dies gilt auch für FIG.18B, wobei hier die den Stützketten 135 zugeordneten Umhüllungen 901B, z.B. für robuster, grösser bauende Stützketten 135, einen vergleichsweise größeren freien Querschnitt haben als die leitungsführende Umhüllung 901A.

FIG.19 veranschaulicht einen mehrlagigen Aufbau mit mehreren Umhüllungen 900-1... 900-5, in welchen erfindungsgemäße Hülleinheiten 900 z.B. nach FIG.9A-9D verwendet werden, wobei einige Umhüllungen 901B gesondert für Stützketten 135 vorgesehen sind z.B. in der unteren, im Umlenkbogen inneren Lage 900-5.

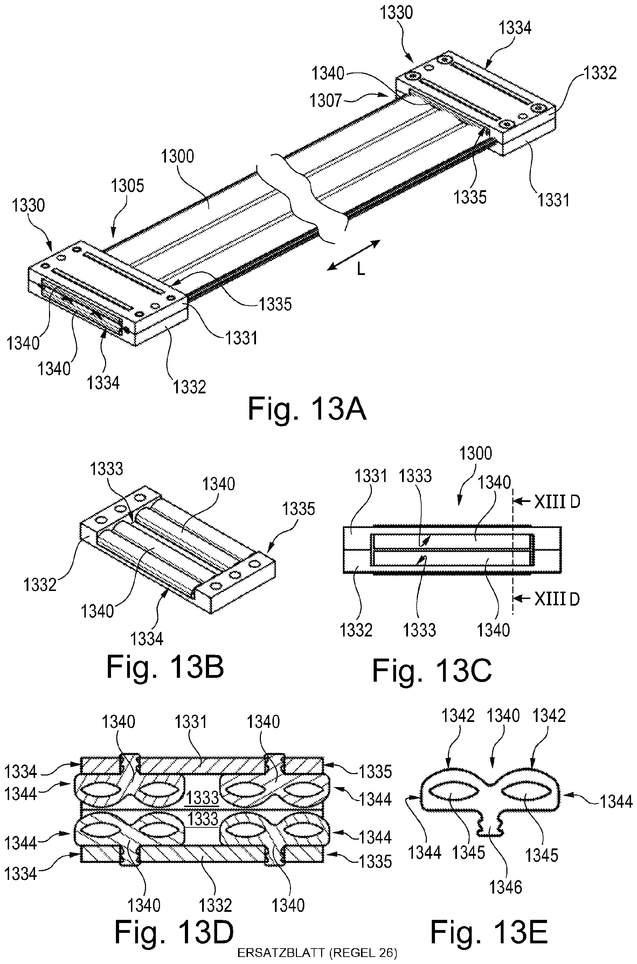

FIG.13A-13E zeigen schließlich eine gattungsgemäße flexible Umhüllung 1300 für Reinraumanwendungen gemäß einer unabhängigen Erfindung, welche vorzugsweise aber nicht zwingend nach einer der Lehren zu FIG.1-12 ausgeführt ist. Die Umhüllung 1300 ist nach dem Prinzip aus FIG.8 verfahrbar. Die beiden Endbereiche 1305, 1307 der Umhüllung 1300 sind dabei anhand baugleicher Klemmvorrichtungen 1330 endseitig angeschlossen, z.B. an einen Festpunkt und einen beweglichen Anschlusspunkt (vgl. FIG.8).

Die Klemmvorrichtung 1330 nach FIG.13A-13E stellt eine Weiterentwicklung des Prinzips aus FIG.1A bzw. FIG.3A dar. Jede Klemmvorrichtung 1330 hat ein erstes Klemmteil 1331 und ein zweites Klemmteil 1332. Jedes Klemmteil 1331, 1332 ist plattenartig, z.B. als Formteil aus Metall, hergestellt und hat jeweils eine innenseitige Vertiefung bzw. Aufnahme 1333 für den entsprechenden Endbereich 1305 bzw. 1307. Die hier etwa rechteckigen Klemmteile 1331, 1332 haben jeweils zwei gegenüberliegenden Stirnseiten 1334, 1335 die quer, hier senkrecht zu einer Durchführrichtung der Leitungen bzw. der Längsrichtung L verlaufen, entsprechend welcher Umhüllung 1300 in der jeweiligen Klemmvorrichtungen 1330 eingesetzt ist. Im gezeigten Beispiel mündet jede Vertiefung bzw. Aufnahme 1333 beidseitig in Längsrichtung L, d.h. an beiden Stirnseiten 1334, 1335 nach Außen, sodass Leitungen ungehindert durchgeführt werden können. Bezüglich der Vertiefung bzw. Aufnahme 1333 sind beide Klemmteil 1331, 1332 vorzugsweise baugleich ausgeführt und unterscheiden sich lediglich bzgl. der Schraubverbindung zum Verspannen beider Klemmteile 1331, 1332 gegeneinander im montierten Zustand (FIG.13A bzw. FIG.13C).

Wie die Perspektivansicht in FIG.13B und der Querschnitt in FIG.13D (entsprechend Schnittebene XIIID aus der Frontanstich in FIG.13C) zeigen sind in jeder Vertiefung 1333 innenseitig jeweils zwei baugleiche Druckstücke 1340 vorgesehen ist.

Die Druckstücke 1340 sind bei geschlossener Klemmvorrichtung 1300 gegen den entsprechenden Endbereich 1305, 1307 der Leitungsschutzführung bzw. Umhüllung 1300 gepresst und halten diesen kraftschlüssig in Längsrichtung. Zudem bewirken die Druckstücke 1340 dabei einen staubdichten Abschluss bzw. dienen als Dichtprofile gegen Partikelaustritt am offenen Ende der Umhüllung 1300.

Dazu ist jedes Druckstück 1340 aus einem gegenüber dem Material der Klemmteile 1331, 1332 kompressibleren bzw. weicheren, insbesondere weichelastischen bzw. gummielastischen oder ggf. auch hartelastischen, Kunststoff hergestellt, insbesondere als Hohlkammer-Extrusionsprofil hier mit zwei im Querschnitt ovalen oder spitzovalen Hohlräumen 1345 (FIG.13E). Die gewünschte Verformbarkeit der Druckstück 1340 kann auch auf andere Weise durch Materialwahl und/oder Formgebung erzielt werden.

Dadurch ist jedes Druckstück 1340 beim Anpressen bzw. Verspannen der Klemmteile 1331, 1332 deformierbar ausgeführt und dient u.a. als Zugentlastung der Leitungen (nicht in FIG.13A-13E gezeigt).

Wie FIG.13D am besten zeigt ist dabei jedes Druckstück 1340 so dimensioniert und/oder angeordnet, dass es in Durchführrichtung bzw. Längsrichtung L, insbesondere mit einer entsprechenden Schmalseite 1344, über die jeweilige Stirnseite 1334 bzw. 1335 des zugehörigen Klemmteils 1331 bzw. 1332 hervorsteht bzw. hervorragt. Dadurch wird erreicht, das jeweilige Druckstück 1340 an der entsprechenden Stirnseite einen Eckenschutz zur Kantenentschärfung bereitstellt, sodass die Leitungsschutzführung bzw. Umhüllung 1300 nicht mit der Kante der jeweiligen Stirnseite 1334 bzw. 1335 in Berührung kommt. Dies ist insbesondere bei der bezüglich des Verlaufs der Umhüllung 1300 innenliegenden bzw. der jeweils anderen Klemmvorrichtung 1330 zugewandten Stirnseite 1335 (FIG.13A) vorteilhaft, an welcher die Umhüllung 1300 in die Klemmvorrichtung 1330 jeweils eingeführt bzw. eingesetzt ist.

Wie Versuche gezeigt haben bildet aufgrund der Fahrbewegung der Umhüllung 1300 (vgl. FIG.8, in FIG.13A nicht in umgelenkter Betriebsstellung gezeigt) eine kritische Stelle bzgl. Entstehung von unerwünschten Partikeln, insbesondere durch Abrieb der Umhüllung 1300 an der Endbefestigungsvorrichtung bei Annäherung des Umlenkbogens 4 (FIG.8). Dieses Problem kann durch die einfache Maßnahme eines Eckenschutzes entschärft werden, hier ohne nennenswerten Mehraufwand anhand der vorgeschlagenen Druckstücke 1340.

Die Druckstücke 1340 stehen über die jeweils kritische Stirnseite 1335 des zugehörigen Klemmteils 1331 bzw. 1332 und zumindest im montierten Zustand schützend hervor. Dabei kann die der Umhüllung 1300 zugewandte Kante der Stirnseite 1335 ggf. auch teilweise umgriffen bzw. abgedeckt werden, dies ist jedoch bei ausreichend schützendem Überstand in Längsrichtung (vgl. FIG.13D) nicht erforderlich, da damit die Druckstücke 1340 bereits einen weicheren Übergang erzeugen. Zudem lässt sich durch geeignete Materialwahl der Druckstücke 1340 bzgl. des Materials der Umhüllung 1300 eine hinsichtlich Abrieb günstigere Materialpaarung im Vergleich zum starren Material, meist Metall, der Klemmteile 1331 bzw. 1332 erzielen. Der Kunststoff der Druckstücke 1340 kann dabei insbesondere härter bzw. weniger weichelastisch sein als der Kunststoff der Umhüllung 1300.

Ein Überstand der Druckstücke 1340 an der gegenüberliegenden freien Stirnseite 1334 ist ebenfalls vorteilhaft zum Schutz von dort aus der Leitungsführung herausgeführten Leitungen und zur Verbesserung der Abdichtwirkung gegen Partikelaustritt.

Vorteilhaft bildet jedes Druckstück 1340 im unbelasteten Zustand an der vom Klemmteil abgewandten Innenseite, im Querschnitt (FIG.13D), mindestens eine oder mehrere konvex gekrümmte bzw. ausgebauchte Oberflächen 1342, um möglichst weiche Übergänge bzw. Grenzflächen an der Außenseite der Umhüllung bereitzustellen.

Die profilartigen Druckstücke 1340 können dabei mit ihrer Längserstreckung senkrecht zur Durchführrichtung L über die Gesamtbreite der Vertiefung 1330 durchgehend verlaufen, wie in FIG.13B gezeigt. Vorzugsweise hat jedes Druckstück 1340 weiterhin zwei abgerundete Schmalseiten 1344.

Die Druckstück 1340 können preiswert und zur Montagevereinfachung als symmetrische Profile ausgeführt sein. Zur Befestigung an den Klemmteilen 1331, 1332 kann jedes Druckstück an der Rückseite eine vorstehende, z.B. verzahnte, Befestigungsrippe 1346 zur Befestigung in einer Quernut des Klemmteils aufweist (FIG.13D).

Vorzugsweise werden in jedem Klemmteil 1331, 1332 jeweils zwei baugleiche Druckstücke 1340 nebeneinander parallel mit einem Abstand (FIG.13D) angeordnet sodass diese senkrecht zur Durchführrichtung, d.h. Längsrichtung L der Umhüllung 1300 verlaufen.

Die vorgeschlagenen Druckstücke 1340 in den Klemmvorrichtungen 1300 bieten nebst einem Eckenschutz zwischen den Klemmteilen 1331, 1332 - insbesondere deren dem Inneren des Umlenkbogens zugewandten Stirnseiten 1335 - und der Umhüllung 1300 zugleich einen besseren Schutz der Leitungen sowie eine zuverlässige modulare Abdichtung gegen Partikelaustritt und/oder endseitige Zugentlastung der Leitungen für unterschiedliche Leitungsdurchmesser. Durch die Druckstücke 1340 wird somit die Anzahl erforderlicher Bauteile verringert und die Montage vereinfacht.

## Patentansprüche

1. Leitungsschutzführung für Leitungen, wie z.B. Kabel, Schläuche oder dergleichen, für eine Reinraumanwendung, mit einer länglichen, flexiblen Umhüllung (100) die hin- und hergehend, insbesondere unter Bildung eines Umlenkbogens (4) zwischen zwei Trumen (1, 3), verfahrbar ist, und wobei die flexible Umhüllung endseitig durch jeweils eine Klemmvorrichtung (130) gegen Austritt von Partikeln verschließbar ist,
wobei die Umhüllung (100) mindestens eine Hülleinheit (101; ... 1001) umfasst, die mindestens eine rohrförmige Aufnahme (102; ... 1002) zur Führung mindestens einer Leitung (6) bildet,
wobei jede Aufnahme (102; ... 1002) sich kanalartig in einer Längsrichtung (L) von einem ersten Ende zu einem zweiten Ende erstreckt; und
wobei die Umhüllung (100) eine Mehrzahl dieser rohrförmigen Aufnahmen (102; ... 1002) aufweist, die parallel zueinander zur getrennten Führung von jeweils mindestens einer Leitung (6) verlaufen,
**dadurch gekennzeichnet, dass** die mindestens eine Hülleinheit (101; ... 1001) an mindestens einer Aufnahme (102; ... 1002), insbesondere seitlich an mindestens einer Aufnahme (102; ... 1002), mindestens einen in Längsrichtung (L) erstreckten Funktionsbereich (110; ... 1010) aufweist, welcher zwei Verschlussprofile (111, 112; ... 1011, 1012) eines Verschlusses umfasst, wobei eines der Verschlussprofile (111; ... 1011) mit dem anderen Verschlussprofil (112; ... 1012) zum staubdichten Schließen eines geöffneten Zustands, in welchem eine Leitung (6) quer zur Längsrichtung (L) eingefügt bzw. entnommen werden kann, zusammenwirkt.

2. Leitungsschutzführung nach Anspruch 1, **dadurch gekennzeichnet, dass** die Umhüllung (100) eine Hülleinheit (101; ... 1601) aus weichelastischem bzw. biegeelastischem Kunststoff umfasst.

3. Leitungsschutzführung nach Anspruch 2, **dadurch gekennzeichnet, dass** die Hülleinheit (101; ... 1601) einteilig ausgeführt ist.

4. Leitungsschutzführung nach Anspruch 2, **dadurch gekennzeichnet, dass** der Kunststoff eine Shore Härte im Bereich von 20 Shore A bis 65 Shore D, insbesondere im Bereich von 50 Shore A bis 100 Shore A, aufweist, und/oder
die Hülleinheit aus einem biegsamen Thermoplast hergestellt ist.

5. Leitungsschutzführung nach einem der Ansprüche 1 bis 4, **dadurch gekennzeichnet,**
**dass** die Umhüllung (100) eine Mehrzahl separater Hülleinheiten (101; 1401; 1601) umfasst, und jede Hülleinheit (101; 1401; 1601) zwei beidseitig gegenüberliegende, mit der Hülleinheiten (101; 1401; 1601) einteilige Befestigungsbänder (122; 1422; 1622) aufweist, mittels welcher benachbarte Hülleinheiten (101; 1401; 1601) parallel miteinander verbunden sind, vorzugsweise wobei jede Hülleinheit (101; ... 1601) zwei mit der Hülleinheit (101; ... 1601) einteilige Verschlussprofile (111, 112; ... 1611, 1612) aufweist.

6. Leitungsschutzführung nach einem der Ansprüche 1 bis 5, **dadurch gekennzeichnet, dass** die Umhüllung (100) eine Mehrzahl separater Hülleinheiten (101; 1401; 1601) umfasst, und jede Hülleinheit (101; 1401; 1601) genau eine rohrförmige Aufnahme (102; 1202; 1602) zur getrennten Führung von jeweils mindestens einer Leitung (6) bildet.

7. Leitungsschutzführung nach einem der Ansprüche 1 bis 5, **dadurch gekennzeichnet, dass** die Umhüllung (400) eine einteilige Hülleinheit (401; 601; 1001; 1101) mit Unterteilungen umfasst, welche mehrere parallele Aufnahmen (402; 602; 1002; 1102) bildet und mindestens zwei mit der Hülleinheit (401; 601; 1001; 1101) einteilige Verschlussprofile (411, 412; 611, 612; 1011, 1012) aufweist.

8. Leitungsschutzführung nach Anspruch 7, **dadurch gekennzeichnet, dass** zu jeder Aufnahme (402; 1002) ein Paar zusammenwirkender Verschlussprofile (411, 412; 1011, 1012) einteilig mit der Hülleinheit (401; 1001) vorgesehen ist.

9. Leitungsschutzführung nach einem der vorstehenden Ansprüche, **dadurch gekennzeichnet, dass** jede Hülleinheit (101; ... 1601) einen in Längsrichtung (L) gleichbleibenden Querschnitt hat.

10. Leitungsschutzführung nach einem der vorstehenden Ansprüche, **dadurch gekennzeichnet, dass** der Funktionsbereich (410; ... 1210) zwei konjugiert ineinandergreifende Verschlussprofile (411, 412; ... 1211, 1212) aus Kunststoff aufweist, die als Verschluss zum Schließen mindestens einer Aufnahme (402; ... 1202) zusammenwirken.

11. Leitungsschutzführung nach Anspruch 10, **dadurch gekennzeichnet, dass** die ineinandergreifenden Verschlussprofile ein Hakenprofil (1011) und ein Klauenprofil (1012) umfassen, welche insbesondere mit Widerhakenfunktion zusammenwirken.

12. Leitungsschutzführung nach Anspruch 10 oder 11, **dadurch gekennzeichnet, dass** jedes Verschlussprofil zwei Profilelemente umfasst.

13. Leitungsschutzführung nach einem der vorstehenden Ansprüche, **dadurch gekennzeichnet, dass** zwei seitlich gegenüberliegende Funktionsbereiche (110, 120) vorgesehen sind, welche jeweils ein Befestigungsprofil (122) aufweisen, wobei die Befestigungsprofile (122) für eine lösbare Verbindung durch Formschluss und/oder Kraftschluss zueinander passend ausgeführt sind und welche vorzugsweise jeweils ein Verschlussprofil (111, 112), insbesondere zwischen Aufnahme (102) und Befestigungsprofil (122) aufweisen.

14. Leitungsschutzführung nach einem der vorstehenden Ansprüche, **dadurch gekennzeichnet, dass** in einer Aufnahme der mindestens einen Hülleinheit eine Stützkette zum Stützen der Umhüllung beim Verfahren vorgesehen ist.

15. Leitungsschutzführung nach einem der vorstehenden Ansprüche, **dadurch gekennzeichnet, dass** der mindestens eine Funktionsbereich jeweils einteilig mit der Hülleinheit verbunden ist.

16. Leitungsschutzführung nach einem der vorstehenden Ansprüche, **dadurch gekennzeichnet, dass** die Aufnahmen (102) parallel miteinander verbunden sind durch bandförmige Zwischenbereiche welche die neutrale Faser (N) vorgeben und/oder zu jedem Verschluss aus zusammenwirkenden Verschlussprofilen (111, 112) die Schnittstelle (113) auf Höhe der neutralen Faser (N) der Umhüllung (100) liegt.

17. Leitungsschutzführung nach einem der vorstehenden Ansprüche, **dadurch gekennzeichnet, dass** die Verschlussprofile (111, 112; ... 1611, 1612) einen in Längsrichtung (L) durchgehend gleichen Querschnitt aufweisen und jeweils ineinandergreifend zusammenwirken.

## Claims

1. A line protective guide for lines like for example cables, hoses or the like, for a clean room application, comprising an elongate flexible encasement (100) which is displaceable reciprocatingly, in particular with the formation of a directionchanging arc (4) between two runs (1, 3), and wherein the flexible encasement is closable at the ends by a respective clamping device (130) against the escape of particles, wherein the encasement (100) includes at least one encasing unit (101,...1001) which forms at least one tubular receiving means (102, ...1002) for guiding at least one line (6), wherein each receiving means (102, ...1002) extends channel-like in a longitudinal direction (L) from a first end to a second end; and
wherein the encasement (100) has a plurality of said tubular receiving means (102, ...1002) which extend parallel to each other to separately guide at least one line (6),
**characterized in that**
the at least one encasing unit (101, ...1001) at at least one receiving means (102,..1002), in particular laterally at at least one receiving means (102,1002), has at least one functional region (110,..1010) which extends in the longitudinal direction (L) and which includes two closure profiles (111, 112,..1011, 1012) of a closure, wherein one of the closure profiles (111,..1011) cooperates with the other closure profile (112,..1012) for dusttightly closing an opened state in which a line (6) can be introduced or removed transversely relative to the longitudinal direction (L).

2. A line protective guide according to claim 1 **characterised in that** the encasement (100) includes an encasing unit (101,...1601) made of soft-elastic plastic or flexurally elastic plastic.

3. A line protective guide according to claim 2 **characterised in that** the encasing unit (101, ...1601) is made in one piece.

4. A line protective guide according to claim 2 **characterised in that** the plastic has a Shore hardness in the range of 20 Shore A to 65 Shore D, in particular in the range of 50 Shore A to 100 Shore A; and/or the encasing unit is made of a flexible thermoplastic.

5. A line protective guide according to one of claims 1 to 4 **characterised in that** the encasement (100) includes a multiplicity of separate encasing units (101, 1401, 1601) and each encasing unit ((101, 1401, 1601) has two fixing strips (122, 1422, 1622) which are in opposite relationship on both sides and which are in one piece with the encasing units (101, 1401, 1601), adjacent encasing units (101, 1401, 1601) being connected together in parallel relationship by the fixing strips, preferably wherein each encasing unit (101,...1601) has two closure profiles (111, 112,...1611,1612) in one piece with the encasing unit (101,...1601).

6. A line protective guide according to one of claims 1 to 5 **characterised in that** the encasement (100) includes a multiplicity of separate encasing units (101, 1401, 1601) and each encasing unit (101, 1401, 1601) forms precisely one tubular receiving means (102; 1202; 1602) for separate guidance of at least one line (6) in each case.

7. A line protective guide according to one of claims 1 to 5 **characterised in that** the encasement (400) includes a one-piece encasing unit (401, 601, 1001, 1101) with subdivision means which forms a plurality of parallel receiving means (402, 602, 1002, 1102) and has at least two closure profiles (411, 412, 611, 612, 1011, 1012) in one piece with the encasing unit (401, 601, 1001, 1101).

8. A line protective guide according to claim 7 **characterised in that** provided for each receiving means (402, 1002) is a pair of co-operating closure profiles (411, 412, 1011, 1012) in one piece with the encasing unit (401,...1001).

9. A line protective guide according to one of the preceding claims **characterised in that** each encasing unit (101,...1601) is of a cross-section which remains the same in the longitudinal direction (L) .

10. A line protective guide according to one of the preceding claims **characterised in that** the functional region (410,..1210) has two closure profiles (411, 412,..1211, 1212) of plastic which are in interengaging conjugate relationship and which co-operate as a closure for closing at least one receiving means (402, 1202).

11. A line protective guide according to claim 10 **characterised in that** the interengaging closure profiles include a hook profile (1011) and a claw profile (1012) which co-operate in particular with a barb function.

12. A line protective guide according to claim 10 or 11, **characterised in that** each closure profile includes two profile elements.

13. A line protective guide according to one of the preceding claims **characterised in that** there are provided two laterally oppositely disposed functional regions (110, 120) which each have a respective fixing profile (122), wherein the fixing profiles (122) are of mutually matching relationship for a releasable connection by positively locking and/or force-locking relationship and which preferably each have a closure profile (111, 112), in particular between receiving means (102) and fixing profile (122).

14. A line protective guide according to one of the preceding claims **characterised in that** a support chain for supporting the encasement during displacement is provided in one receivig means of the at least one encasing unit.

15. A line protective guide according to one of the preceding claims **characterised in that** the at least one functional region is formed in one piece with a respective encasing unit.

16. A line protective guide according to one of the preceding claims **characterised in that** the receiving means (102) are connected together in parallel relationship by strip-shaped intermediate regions which predetermine the neutral fibre (H) and/or at each closure comprising co-operating closure profiles (111, 112) the interface (113) is disposed at the level of the neutral fibre (H).

17. A line protective guide according to one of the preceding claims **characterised in that** the closure profiles (111, 112, ... 1611, 1621) are of a cross-section which is the same throughout in the longitudinal direction (L) and in each case co-operate in an interengaging manner.

## Revendications

1. Guidage de protection pour lignes, comme p. ex. des câbles, des tuyaux flexibles ou similaires, pour une application en salle blanche, avec une gaine flexible allongée (100) qui peut être déplacée selon un mouvement de va-et-vient, notamment en formant un coude de déviation (4) entre deux brins (1, 3), l'enveloppe flexible pouvant être fermée à chaque extrémité par un dispositif de serrage (130) afin d'empêcher la sortie de particules, l'enveloppe (100) comprenant au moins une unité d'enveloppe (101 ; ... 1001), qui forme au moins un compartiment tubulaire (102 ; ... 1002) destiné à guider au moins une ligne (6), chaque compartiment (102 ; ... 1002) s'étendant sous forme de canal dans un sens longitudinal (L) d'une première extrémité à une deuxième extrémité ; et la gaine (100) présentant une pluralité de ces compartiments tubulaires (102 ; ... 1002) qui s'étendent parallèlement entre eux en vue du guidage séparé de respectivement au moins une ligne (6), car a c t é r i s é en ce que la au moins une unité d'enveloppe (101 ; ... 1001) présente sur au moins un compartiment (102 ; ... 1002), en particulier latéralement sur au moins un compartiment (102 ; ... 1002), au moins une zone fonctionnelle (110 ; ... 1010) s'étendant dans le sens longitudinal (L), ladite zone fonctionnelle comprenant deux profilés de fermeture (111, 112 ; ... 1011, 1012) d'une fermeture, l'un des profilés de fermeture (111 ; ... 1011) coopérant avec l'autre profilé de fermeture (112 ; ... 1012) en vue de fermer de manière étanche à la poussière un état ouvert dans lequel une ligne (6) peut être insérée ou retirée perpendiculairement au sens longitudinal (L) .

2. Guidage de protection pour lignes selon la revendication 1, **caractérisé en ce que** l'enveloppe (100) comprend une unité d'enveloppe (101 ; ... 1601) en matière synthétique souple et élastique ou souple en flexion.

3. Guidage de protection pour lignes selon la revendication 2, **caractérisé en ce que** l'unité d'enveloppe (101 ; ... 1601) est réalisée d'une seule pièce.

4. Guidage de protection pour lignes selon la revendication 2, **caractérisé en ce que** la matière synthétique présente une dureté Shore située dans la plage de 20 Shore A à 65 Shore D, en particulier dans la plage de 50 Shore A à 100 Shore A, et/ou que l'unité d'enveloppe est réalisée dans un thermoplastique flexible.

5. Guidage de protection pour lignes selon l'une des revendications 1 à 4, **caractérisée en ce que** l'enveloppe (100) comprend une pluralité d'unités d'enveloppe séparées (101 ; 1401 ; 1601) et que chaque unité d'enveloppe (101 ; 1401 ; 1601) présente deux bandes de fixation opposées des deux côtés (122 ; 1422 ; 1622) d'une seule pièce avec l'unité d'enveloppe (101 ; 1401 ; 1601), au moyen desquelles des unités d'enveloppe voisines (101 ; 1401 ; 1601) sont assemblées parallèlement entre elles, de préférence chaque unité d'enveloppe (101 ; ... 1601) présentant deux profilés de fermeture (111, 112 ; ... 1611, 1612) d'une seule pièce avec l'unité d'enveloppe (101 ; ... 1601) .

6. Guidage de protection pour lignes selon l'une des revendications 1 à 5, **caractérisé en ce que** l'enveloppe (100) comprend une pluralité d'unités d'enveloppe séparées (101 ; 1401 ; 1601) et que chaque unité d'enveloppe (101 ; 1401 ; 1601) forme exactement un compartiment tubulaire (102 ; 1202 ; 1602) en vue du guidage séparé de respectivement au moins une ligne (6).

7. Guidage de protection pour lignes selon l'une des revendications 1 à 5, **caractérisé en ce que** l'enveloppe (400) comprend une unité d'enveloppe en une seule partie (401 ; 601 ; 1001 ; 1101) à subdivisions qui forme plusieurs compartiments parallèles (402 ; 602 ; 1002 ; 1102) et présente au moins deux profilés de fermeture (411, 412 ; 611, 612 ; 1011, 1012) d'une seule pièce avec l'unité d'enveloppe (401 ; 601 ; 1001 ; 1101) .

8. Guidage de protection pour lignes selon la revendication 7, **caractérisé en ce qu'**est prévue pour chaque compartiment (402 ; 1002) une paire de profilés de fermeture (411, 412 ; 1011, 1012) d'une seule pièce avec l'unité d'enveloppe (401 ; 1001).

9. Guidage de protection pour lignes selon l'une des revendications précédentes, **caractérisé en ce que** chaque unité d'enveloppe (101 ; ... 1601) a une section transversale constante dans le sens longitudinal (L).

10. Guidage de protection pour lignes selon l'une des revendications précédentes, **caractérisé en ce que** la zone fonctionnelle (410 ; ... 1210) présente deux profilés de fermeture (411, 412 ; ... 1211, 1212) en matière synthétique s'engageant de manière conjuguée l'un dans l'autre, qui coopèrent en tant que fermeture afin de fermer au moins un compartiment (402 ; ... 1202).

11. Guidage de protection pour lignes selon la revendication 10, car a c t é r i s é e n ce que les profilés de fermeture engagés l'un dans l'autre comportent un profilé en crochet (1011) et un profilé en griffe (1012) qui coopèrent en particulier avec une fonction d'ardillon.

12. Guidage de protection pour lignes selon la revendication 10 ou 11, **caractérisé en ce que** chaque profilé de fermeture comprend deux éléments profilés.

13. Guidage de protection pour lignes selon l'une des revendications précédentes, **caractérisé en ce que** sont prévues deux zones fonctionnelles latéralement opposées (110, 120) qui présentent chacune un profilé de fixation (122), les profilés de fixation (122) étant conformés pour être complémentaires en vue d'une liaison amovible par complémentarité de forme et/ou par force et présentant préférentiellement respectivement un profilé de fermeture (111, 112), en particulier entre le compartiment (102) et le profilé de fixation (122).

14. Guidage de protection pour lignes selon l'une des revendications précédentes, **caractérisé en ce qu'**est prévu dans un compartiment de la au moins une unité d'enveloppe une chaîne de soutien destinée à soutenir l'enveloppe lors de son déplacement.

15. Guidage de protection pour lignes selon l'une des revendications précédentes, **caractérisé en ce que** la au moins une zone fonctionnelle est reliée respectivement d'une seule pièce à l'unité d'enveloppe.

16. Guidage de protection pour lignes selon l'une des revendications précédentes, **caractérisé en ce que** les compartiments (102) sont reliés parallèlement entre eux par des zones intermédiaires en forme de bande qui prescrivent la fibre neutre (N) et/ou que pour chaque fermeture composée de profilés de fermeture coopérants (111, 112), l'interface (113) se trouve au niveau de la fibre neutre (N) de l'enveloppe (100) .

17. Guidage de protection pour lignes selon l'une des revendications précédentes, **caractérisé en ce que** les profilés de fermeture (111, 112 ; ... 1611, 1612) présentent une section transversale constante dans le sens longitudinal (L) et coopèrent respectivement par engrènement réciproque.
